(19) Europäisches Patentamt
European Patent Office
Office européen des brevets

(11) EP 3 205 044 B1

(12) **EUROPEAN PATENT SPECIFICATION**

(45) Date of publication and mention
of the grant of the patent:
**28.11.2018 Bulletin 2018/48**

(51) Int Cl.:
**H04L 9/00** (2006.01)    **H04L 9/06** (2006.01)

(21) Application number: **15763170.6**

(22) Date of filing: **01.09.2015**

(86) International application number:
**PCT/US2015/047974**

(87) International publication number:
**WO 2016/057134 (14.04.2016 Gazette 2016/15)**

(54) **ROTATION-BASED CIPHER**

ROTATIONSBASIERTE VERSCHLÜSSELUNG

CHIFFREMENT BASÉ SUR ROTATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.10.2014 US 201462062306 P**
**06.02.2015 US 201514616110**

(43) Date of publication of application:
**16.08.2017 Bulletin 2017/33**

(73) Proprietor: **Qualcomm Incorporated**
**San Diego, CA 92121-1714 (US)**

(72) Inventors:
• **BRUMLEY, Billy**
**San Diego, California 92109 (US)**
• **AVANZI, Roberto**
**San Diego, California 92121-1714 (US)**

(74) Representative: **Howe, Steven**
**Reddie & Grose LLP**
**The White Chapel Building**
**10 Whitechapel High Street**
**London E1 8QS (GB)**

(56) References cited:
**US-A1- 2004 184 609     US-A1- 2014 198 913**

• **SCHNEIER BRUCE ET AL: "Unbalanced Feistel networks and block cipher design", 21 February 1996 (1996-02-21), ADVANCES IN COMMUNICATION NETWORKING : 20TH EUNICE/IFIP EG 6.2, 6.6 INTERNATIONAL WORKSHOP, RENNES, FRANCE, SEPTEMBER 1-5, 2014, REVISED SELECTED PAPERS; [LECTURE NOTES IN COMPUTER SCIENCE , ISSN 1611-3349], SPRINGER VERLAG, DE, PAGE(S) 121 - 144, XP047294331, ISSN: 0302-9743 ISBN: 978-3-642-36699-4 [retrieved on 2005-06-02] cited in the application the whole document**

**Description**

**BACKGROUND**

**Field of the Disclosure**

Aspects of the disclosure relate generally to communication, and more specifically, but not exclusively, to a rotation-based cipher.

**Description of Related Art**

A cipher is a cryptographic algorithm used for encryption and/or decryption. On the encryption side, information, commonly referred to as plaintext, is operated on by the cipher to generate encrypted information, commonly referred to as ciphertext. On the decryption side, encrypted information is operated on by the cipher to recreate the original information (the original plaintext). There are various types of ciphers, including so-called block ciphers such as the data encryption standard (DES) cipher and the advanced encryption standard (AES) cipher.

A good block cipher is designed around two important principles stated by Claude Shannon: confusion and diffusion. Confusion means that the ciphertext should depend on the plaintext and a cryptographic key in a way that is as mathematically complex as possible. Diffusion means that small local changes in the plaintext should affect as much of the ciphertext as possible. These goals are typically achieved through the use of simple building blocks that achieve confusion for a small number of bits (e.g., so-called substitution boxes (S-Boxes)), normally placed in a wide array called the substitution layer, and by linear layers that intermix the outputs of the substitution layer.

S-Boxes typically map n-bits to n-bits. In some cases (e.g., in designs such as BLOWFISH or CAST), however, S-Boxes map n-bits to m-bits with m larger than n. For example, 8-bit to 32-bit S-Boxes can be employed. In these cases, the S-Boxes also perform part of the role of diffusion, facilitating the design of the cipher. However, in contrast with n-bit to n-bit S-Boxes, such n-bit to m-bit S-Boxes are not bijective functions and they may make the analysis of the cipher more difficult. Also, these S-Boxes are relatively large. For example, in a table-based implementation, BLOWFISH and CAST S-Boxes take up four times as much space as conventional 8-bit S-Boxes.

Moreover, these table-based implementations are inherently susceptible to cache-timing attacks. A cipher's internal state is intended to be secret. However, parts of the state are used as indexes or offsets to the S-Box lookup tables. Latency associated with performing loads from the tables depends on the availability in the processor's data cache. By measuring this latency, an attacker can exploit this dependency to recover the internal cipher state and, eventually, the cryptographic key used by the cipher.

United States Patent Application with publication number US 2014/198913 A1 describes techniques for generating cryptographic values. Binary input values are rotated by a number of bits equal to the Hamming Weight of the input values. A bitwise exclusive OR (XOR) operation is performed on the input and/or output of the rotation operation and a predefined value.

United States Patent Application with publication number US 2004/184609 A1 describes techniques for generating random sequences for encryption and decryption.

**SUMMARY**

The following presents a simplified summary of some aspects of the disclosure to provide a basic understanding of such aspects. This summary is not an extensive overview of all contemplated features of the disclosure, and is intended neither to identify key or critical elements of all aspects of the disclosure nor to delineate the scope of any or all aspects of the disclosure. Its sole purpose is to present various concepts of some aspects of the disclosure in a simplified form as a prelude to the more detailed description that is presented later.

Various aspects of the present disclosure provide for a cipher where variable rotation of a value (e.g., a table, a string, or some other value) is employed as a large S-Box to achieve both confusion and diffusion. In some aspects, for each iteration of an iterative cipher, a subset of a state value is expanded to calculate a rotation distance for such a rotating S-Box, whereby the rotated S-Box or part thereof is then combined with the state value and the new state value is rotated for the next iteration. Advantageously, the cipher may be implemented in software (or other code) using conventional instructions, and without the need for large S-Box lookup tables. The cipher can be used for encryption (enciphering) of plaintext and decryption (deciphering) of ciphertext.

In one aspect, the disclosure provides a method for generating a ciphered signal including receiving a first signal; determining a state value based on the first signal; determining a rotation distance based on the state value; rotating a first value based on the rotation distance; combining the rotated first value and the state value; and generating a second signal based on the combination of the rotated first value and the state value.

Another aspect of the disclosure provides an apparatus configured for generating a ciphered signal including a memory circuit and a processing circuit coupled to the memory circuit. The processing circuit is configured to: receive a first signal from the memory circuit; determine a state value based on the first signal; determine a rotation distance based on the state value; rotate a first value based on the rotation distance; combine the rotated first value and the state value; and generate a second signal based on the combination of the rotated first value and the state value.

Another aspect of the disclosure provides an apparatus configured for generating a ciphered signal. The apparatus including means for receiving a first signal; means for determining a state value based on the first signal; means for determining a rotation distance based on the state value; means for rotating a first value based on the rotation distance; means for combining the rotated first value and the state value; and means for generating a second signal based on the combination of the rotated first value and the state value.

Another aspect of the disclosure provides a non-transitory computer-readable medium storing computer executable code, including code to receive a first signal; determine a state value based on the first signal; determine a rotation distance based on the state value; rotate a first value based on the rotation distance; combine the rotated first value and the state value; and generate a second signal based on the combination of the rotated first value and the state value.

Further to the above, in accordance with additional aspects of the disclosure, the rotating and the combining impart nonlinearity on the state value and diffuse the combination within a subsequent instance of the state value. In accordance with additional aspects of the disclosure, the first value is a substitution box value. In accordance with additional aspects of the disclosure, the combining includes masking the rotated first value, and combining the masked rotated first value and the state value. In accordance with additional aspects of the disclosure, the combining includes generating an interim instance of the state value by combining the rotated first value and the state value. In accordance with additional aspects of the disclosure, the generation of the second signal includes generating a subsequent instance of the state value by rotating the interim instance of the state value. In accordance with additional aspects of the disclosure, the interim instance of the state value is rotated by a quantity of bits that is based on a quantity of bits of the first value. In accordance with additional aspects of the disclosure, the generation of the interim instance of the state value includes combining a cryptographic key with a result of the combination of the rotated first value and the state value. In accordance with additional aspects of the disclosure, the determination of the state value includes generating a current instance of the state value by combining a cryptographic key and a previous instance of the state value. In accordance with additional aspects of the disclosure, the determination of the rotation distance is further based a subset of the state value. In accordance with additional aspects of the disclosure, the determination of the rotation distance includes: selecting a subset of bits from the state value, determining a first number that corresponds to the selected subset of bits, determining a second number that corresponds to a quantity of bits of the first value, and multiplying the first number by the second number. In accordance with additional aspects of the disclosure, the determination of the rotation distance includes: masking the state value, and shifting the masked state value. In accordance with additional aspects of the disclosure, the determination of the rotation distance further includes: shifting a second value based on the shifted masked state value, masking the shifted second value, and shifting the masked shifted second value. In accordance with additional aspects of the disclosure, the determination of the state value includes generating a current instance of the state value by rotating a previous instance of the state value. In accordance with additional aspects of the disclosure, the generation of the second signal includes combining a cryptographic key with the combination of the rotated first value with the state value. In accordance with additional aspects of the disclosure, the first value has a value such that the combination of the rotated first value and the state value is bijective. In accordance with additional aspects of the disclosure, the first value is bijective. In accordance with additional aspects of the disclosure, the first signal comprises plaintext, and the second signal comprises an encrypted representation of the plaintext. In accordance with additional aspects of the disclosure, the first signal comprises ciphertext, and the second signal comprises a decrypted representation of the ciphertext. In accordance with additional aspects of the disclosure, the determination of the rotation distance, the rotation of the first value, and the combining of the rotated first value and the state value are performed on an iterative basis to generate the second signal based on the received first signal.

In accordance with additional aspects of the disclosure, the determination of the rotation distance, the rotation of the first value, and the combination of the rotated first value with the state value may be performed by operations: s ^= ROR(sbox, (s & M1) << S1) & MASK, and s = ROR(s, R1), where ^= is an XOR operation, ROR is a rotate right operation, & is an AND operation, << is a bit shift left operation, s corresponds to instances of the state value, M1 is a first mask value, MASK is a second mask value, S1 is a shift value, R1 is a rotation value, and sbox corresponds to instances of the first value.

In accordance with additional aspects of the disclosure, the determination of the rotation distance, the rotation of the first value, and the combination of the rotated first value with the state value may be performed by operations: s = ROL(s, R1), and s ^= ROR(sbox, (s & M1) << S1) & MASK, where ^= is an XOR operation, ROL is a rotate left operation, ROR is a rotate right operation, & is an AND operation, << is a bit shift left operation, s corresponds to instances of the state value, M1 is a first mask value, MASK is a second mask value, R1 is a rotation value, S1 is a shift value, and sbox corresponds to instances of the first value.

In accordance with additional aspects of the disclosure, the determination of the rotation distance, the rotation of the first value, and the combination of the rotated first value with the state value may be performed by operations: s ^= ROR(sbox, (s & M1) << S1), and s = ROR(s, R1), where ^= is an XOR operation, ROR is a rotate right operation, & is an AND operation, << is a bit shift left operation, s corresponds to instances of the state value, M1 is a mask value, S1 is a shift value, R1 is a rotation value, and sbox corresponds to instances of the first value.

In accordance with additional aspects of the disclosure, the determination of the rotation distance, the rotation of the first value, and the combination of the rotated first value with the state value may be performed by operations: s = ROL(s, R1), shift = (tinv >> ((state & M1) << S1)) << S2, and s ^= ROR(sbox, shift), where ^= is an XOR operation, ROL is a rotate left operation, ROR is a rotate right operation, & is an AND operation, << is a bit shift left operation, >> is a bit shift right operation, s corresponds to instances of the state value, M1 is a mask value, S1 is a first shift value, S2 is a second shift value, R1 is a first rotation value, shift is a second rotation value, tinv is an inverse substitution box value, and sbox corresponds to instances of the first value.

These and other aspects of the disclosure will become more fully understood upon a review of the detailed description, which follows. Other aspects, features, and implementations of the disclosure will become apparent to those of ordinary skill in the art, upon reviewing the following description of specific implementations of the disclosure in conjunction with the accompanying figures. While features of the disclosure may be discussed relative to certain implementations and figures below, all implementations of the disclosure can include one or more of the advantageous features discussed herein. In other words, while one or more implementations may be discussed as having certain advantageous features, one or more of such features may also be used in accordance with the various implementations of the disclosure discussed herein. In similar fashion, while certain implementations may be discussed below as device, system, or method implementations it should be understood that such implementations can be implemented in various devices, systems, and methods.

## BRIEF DESCRIPTION OF THE DRAWINGS

FIG. 1 illustrates an example of a system in which one or more aspects of the disclosure may find application.

FIG. 2 illustrates a data encryption standard (DES) block cipher.

FIG. 3 illustrates a table of a bit-wise linear transformation for a DES block cipher.

FIG. 4 illustrates an advanced encryption standard (AES) block cipher.

FIG. 5 illustrates an example of a rotation-based cipher in accordance with some aspects of the disclosure.

FIG. 6 illustrates another example of a rotation-based cipher in accordance with some aspects of the disclosure.

FIG. 7 illustrates an example of a processing circuit that operates on plaintext to generate ciphertext in accordance with some aspects of the disclosure.

FIG. 8 illustrates an example of a processing circuit that operates on ciphertext to generate plaintext in accordance with some aspects of the disclosure.

FIG. 9 illustrates another example of a processing circuit that operates on plaintext to generate ciphertext in accordance with some aspects of the disclosure.

FIG. 10 illustrates another example of a processing circuit that operates on ciphertext to generate plaintext in accordance with some aspects of the disclosure.

FIG. 11 illustrates an example of cipher circuitry in accordance with some aspects of the disclosure.

FIG. 12 illustrates a block diagram of an example hardware implementation for an electronic device that supports cryptographic security in accordance with some aspects of the disclosure.

FIG. 13 illustrates an example of a cipher process in accordance with some aspects of the disclosure.

FIG. 14 illustrates another example of a cipher process in accordance with some aspects of the disclosure.

FIG. 15 illustrates a cipher process that provides a more detailed example of the cipher process of FIG. 14 in accordance with some aspects of the disclosure.

FIG. 16 illustrates another example of a cipher process in accordance with some aspects of the disclosure.

FIG. 17 illustrates a cipher process that provides a more detailed example of the cipher process of FIG. 16 in accordance with some aspects of the disclosure.

## DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

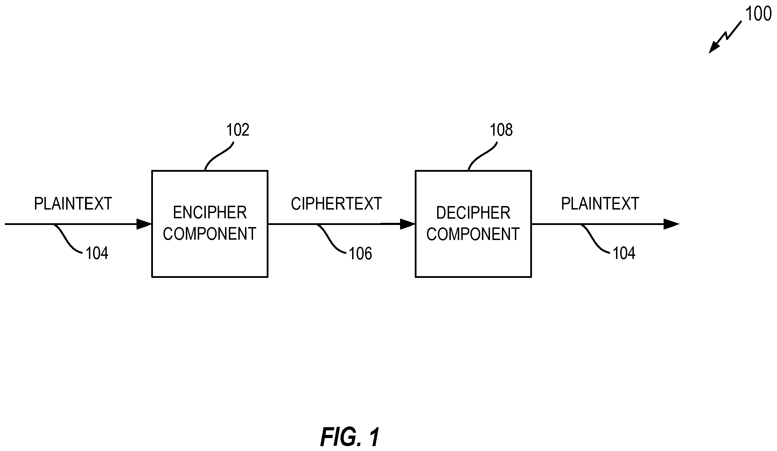

FIG. 1 is a simplified example of a system 100 that employs a cipher. The system 100 includes an encipher component 102 that encrypts plaintext 104, thereby generating ciphertext 106. For example, encryption may be used to ensure that the plaintext 104 is secured prior to storage or transmission to another component (not shown). The system 100 also includes a decipher component 108 that decrypts the ciphertext 106, thereby recovering the original plaintext 104. Thus, use of the original plaintext 104 can be limited to authorized users who have been given the capability to decrypt the ciphertext 106. In practice, a given system can include one or more of the components of FIG. 1. For example, some systems may only encrypt information, some system may only decrypt information, and some systems may both encrypt and decrypt information.

For a block cipher, confusion is typically achieved through the use of nonlinear techniques (commonly referred to as the nonlinear layer). For example, S-Boxes can be employed whereby a given input block of information is substituted with another block of information defined by a corresponding one of the S-Boxes.

In contrast, diffusion for a block cipher is typically achieved through the use of linear techniques (commonly referred to as the linear layer). For example, permutation techniques can be employed to spread information throughout the cipher space. For purposes of illustration, these concepts will be described with reference to examples of a DES block cipher and an AES block cipher.

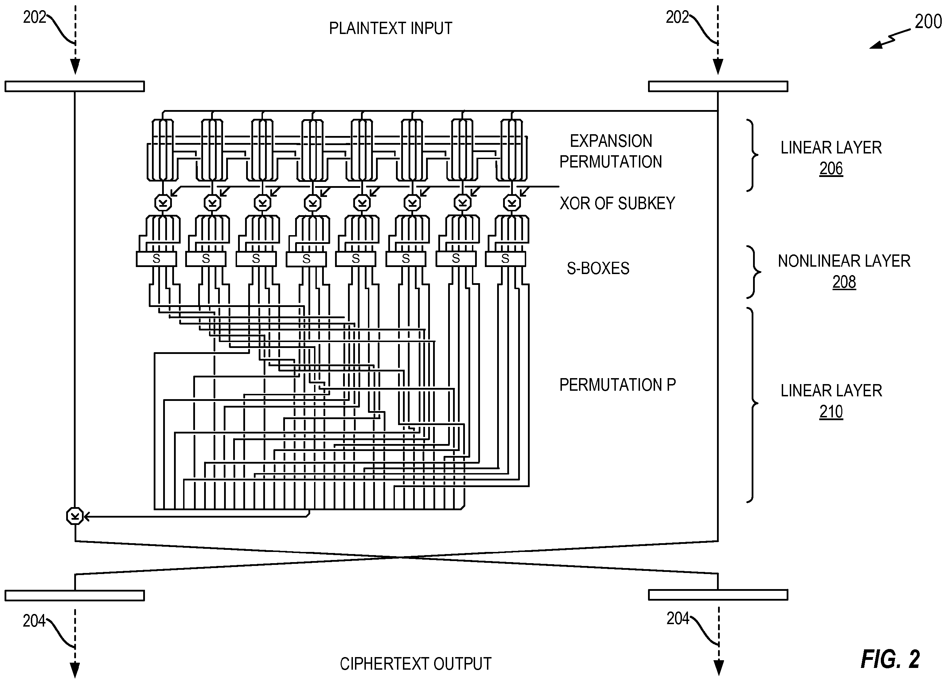

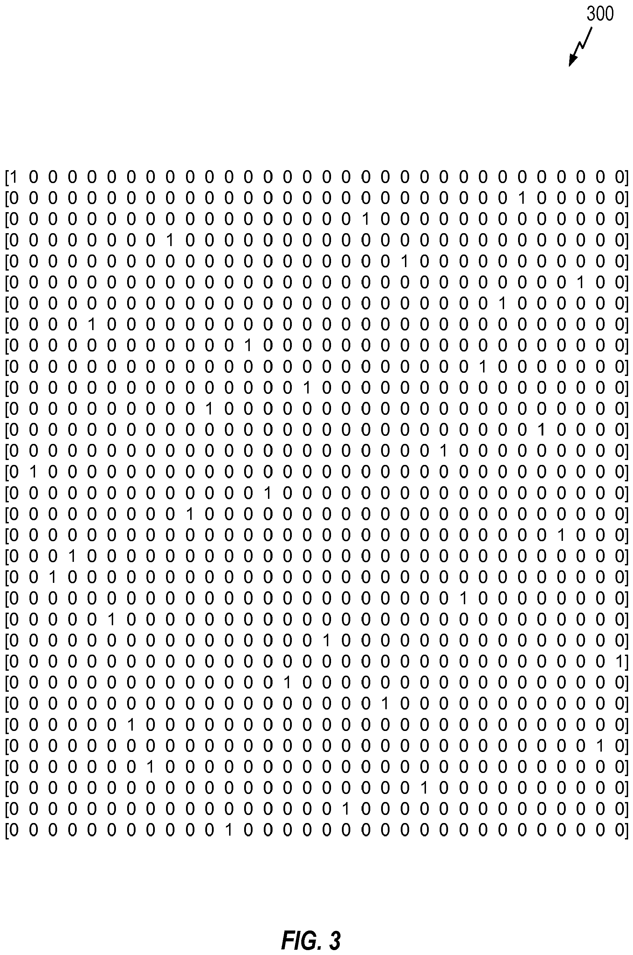

FIG. 2 illustrates an example of a DES block cipher 200. The input information (plaintext) 202 is operated on by a first linear layer 206 (an expansion permutation), a nonlinear layer 208 (S-Boxes), and a second linear layer 210 (permutation P) to generate output information (ciphertext) 204. The nonlinear layer 208 involves substituting S-Box information for the information input into the S-Boxes. Each linear layer 206 or 210 (permutation) effectively moves bits around horizontally throughout the cipher space. The linear layers 206 and 210 can be thought of as a bit-wise linear transformation which can be represented by a table such as the table 300 of FIG. 3.

In practice, such a linear transformation is relatively easy to implement in hardware (e.g., as shown in FIG. 2). However, it is more difficult to efficiently implement such a linear transformation in software. For example, non-custom processors generally do not provide native operations to directly perform these operations.

Consequently, for a software implementation, DES is typically implemented as a series of table lookups. Each lookup into a lookup table will map to a given entry m in the lookup table. In one example, at most four bits are set in any of the entries. In this case, each table lookup for successive DES rounds may involve four 6-bit lookups. Permutation of the input bits across the cipher space is thus achieved through these table lookups.

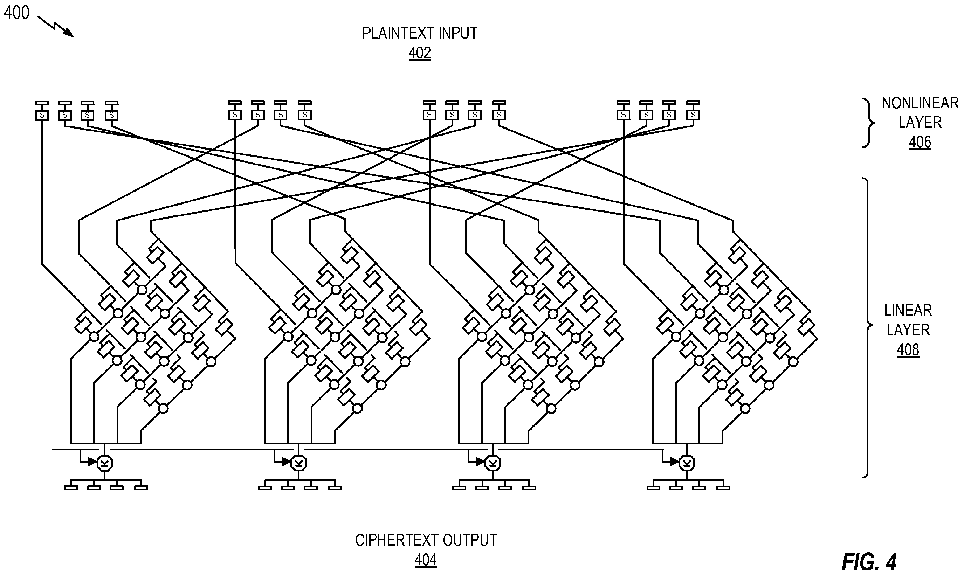

FIG. 4 illustrates an example of an AES block cipher 400. The input information (plaintext) 402 is operated on by a nonlinear layer 406 (S-Boxes) and a linear layer 408 (shift row and mix column) to generate output information (ciphertext) 404. In this case, the linear layer 408 involves more than a simple permutation. Rather, bits are mixed in a mathematical manner. For example, the linear layer 408 may involve a linear transformation which can be represented by a vector equation.

Similar to DES, the linear layer for AES is relatively difficult to implement efficiently in software. Thus, for a software implementation, AES is also typically implemented as a series of table lookups. In one example, each table lookup for successive AES rounds may involve shifting a state value, masking off a byte, and running the results through the lookup table.

### Rotation-Based Ciphers

The disclosure relates in some aspects to rotation-based ciphers. In some aspects, such a rotation-based cipher can be efficiently implemented in software (as well as hardware) and may be resistant to cache timing attacks (side-channel resistance). In some aspects, such a cipher can be implemented with a very small code footprint. For example, on an Intel® x64 processor, such a cipher can be implemented in less than 100 bytes and/or in less than 25 machine instructions in some implementations. Two examples of rotation-based ciphers are discussed in detail below.

### First Example

In a first example, a cipher is obtained by repeating a single round designed around the following operation:

$$\text{state} = \text{state XOR wide-s-box(state AND 0xF)} \qquad \textit{EQUATION 1}$$

followed or preceded by round key mixing:

$$\text{state} = \text{state XOR key\_i} \qquad \textit{EQUATION 2}$$

and a rotation of the state, for instance:

$$\text{state} = \text{ROR(state, 4)} \qquad \textit{EQUATION 3}$$

The wide-s-box is obtained by *concatenating* all the values of a small 4 bit substitution box S in a 64 bit integer or array (because a 4 bit substitution box has 16 entries, and 16*4 = 64). For instance, if a value (e.g., a string, a table, an array, or some other value) called sbox is defined as:

$$\text{sbox} := \text{S[15]} \,|\, \text{S[14]} \,|\, \text{S[13]} \,|\, \ldots \,|\, \text{S[2]} \,|\, \text{S[1]} \,|\, \text{S[0]}, \qquad \textit{EQUATION 4}$$

where the four bits of S[15] are the most significant bits of sbox and the four bits of S[0] are the four least significant bits of sbox, then from the value sbox, any value of S[] can be retrieved as:

$$\text{S[v]} = (\text{ sbox} \gg (\text{v} * 4) ) \text{ AND 0xF} \qquad \textit{EQUATION 5}$$

In some aspect, this may be considered a lookup. Accordingly, the whole wide-s-box may be constructed as a rotation of the value (e.g., integer, array, etc.) by removing the masking with 0xF and replacing the shift with a rotation (ROR = Rotation to the Right). Thus, a "wide", "rotating" S-Box can be defined that maps 4 bits to 64 as follows:

$$\textit{EQUATION 6}$$
$$\text{wide-s-box(v)} = \text{ROR(sbox,v*4)} \qquad (\text{hence S[v]} = \text{wide-s-box(v) AND 0xF})$$

However, with the operation:

$$\text{state} = \text{state XOR wide-s-box(state AND 0xF)} \qquad \textit{EQUATION 7}$$

the lowest four bits of state are transformed as well. Consequently, these transformed bits cannot be effectively used in an inverse operation (e.g., decryption) to determine the shift index (multiplying by 4) and rotating the sbox 64 bit value. To address this issue, the operations that follows can be used instead:

$$\textit{EQUATION 8}$$
$$\text{state} = \text{state XOR (wide-s-box(state AND 0xF) AND 0xFFFFFFFFFFFFFFF0)}$$

In this case, the lowest four bits are not modified. Thus, these bits can be used to compute the value of the wide-s-box and thus revert the last step. Accordingly, to decrypt, the encryption steps can simply be performed in reverse.

In some aspects, the above cipher is a Target-Heavy Feistel Network as defined in "Unbalanced Feistel Networks and Block Cipher Design", authors Bruce Schneier and John Kelsey, in Proceedings of the Third International Workshop on Fast Software Encryption, Pages 121-144, Springer-Verlag, 1996. However, in this example cipher, the substitution is computed by a rotating S-Box.

A pseudocode example of a 64-bit block cipher (named "paul_encrypt") with such a cipher (e.g., encryption) function follows.

*EQUATION 9*

```
Mask = 0xFFFFFFFFFFFFFFF0ULL
void paul_encrypt(uint64_t * ciphertext, uint64_t plaintext, uint64_t key)
{
        int i;
        uint64_t state, boxvalue;
        int shift;

        state = plaintext;

        for (i = 0; i <= ROUNDS - 1; i++)
        {
           state = state XOR key_i        // key mixing

           index = state & 0xF        // select S-Box from least significant 4 bits of state

           boxvalue = sbox >>> (index*4)

           state = state XOR (boxvalue AND Mask)      // substitution and diffusion

           if (i <> ROUNDS-1)
              state =  state >>> 4              // rotate the state
        }

        state = state XOR key_ROUNDS        // output whitening (last key mixing)

        * ciphertext = state;
}
```

In place of the XOR operation, another operation can be used to perform the key mixing and/or the mixing of the rotated S-Box. For example, integer addition, integer subtraction, or some other mixing (combining) operation may be employed.

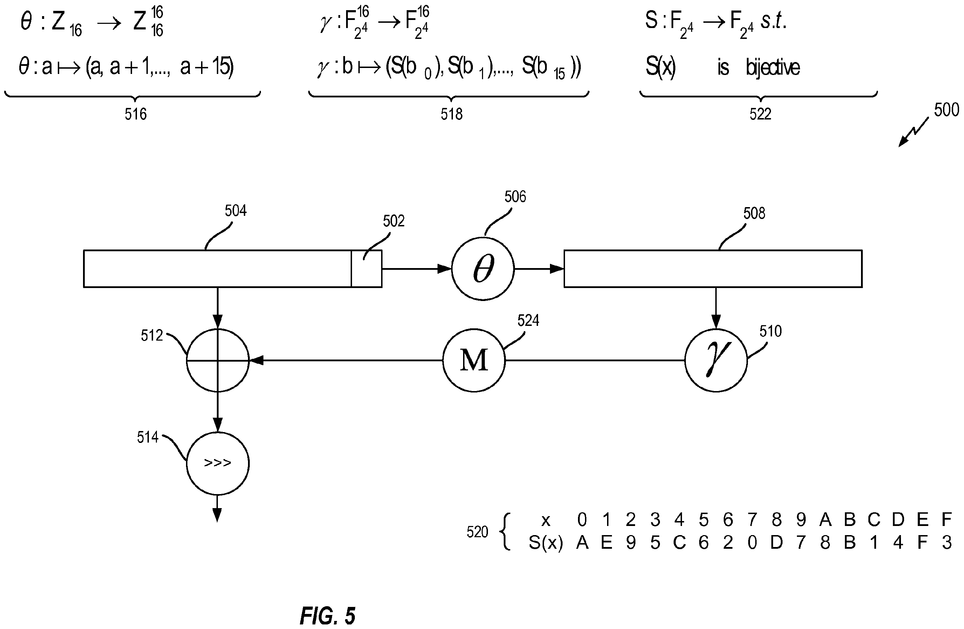

FIG. 5 is a conceptual representation of a rotation-based cipher 500 in accordance with the teachings herein. For a given round of the cipher 500, a subset 502 of the current state 504 is operated on by a $\theta$ function 506 to provide an expanded output 508. The expanded output 508 is operated on by a $\gamma$ function 510, whereby the output of the $\gamma$ function 510 is masked 524 and then XORed 512 with the current state 504. The resulting output is then subject to rotation 514 to provide the state 504 for the next round of the cipher 500.

For purposes of illustration, the operation of the cipher 500 will be described in more detail in the context of an implementation that uses a 64-bit state parameter and 4-bit S-Boxes. It should be understood, however, that the teachings herein are not limited to such an implementation and that other state and S-Box sizes can be used in other implementations.

The 64-bit state 504 consists of 16 4-bit nibbles. For each round, one nibble is input to the $\theta$ function 506. The $\theta$ function 506 expands the 4-bit nibble of the subset 502 to provide a 64-bit expanded output 508. This operation is shown by the $\theta$ description 516 in FIG. 5. Here, an input $a$ of 0x0 maps to {0x0, 0x1, 0x2, ... , 0xE, 0xF}, an input $a$ of 0x1 maps to {0x1, 0x2, 0x3, ... , 0xF, 0x0}, and so on. The expanded output 508 may be represented as (a+15) | (a+14) | ... | (a+1) | a; where | denote concatenation of 4-bit values.

In some aspects, the $\theta$ function 506 is a linear layer that provides a diffusion function. Accordingly, relatively wide S-Boxes are created from compact table-based S-Boxes.

The $\gamma$ function 510 performs a byte substitution operation as indicated by the $\gamma$ description 518 in FIG. 5. In some aspects, the $\gamma$ function 510 is a nonlinear layer that provides a confusion function. As indicated at 522, the S-Box is selected such that S($x$) is bijective.

The $\gamma$ function 510 uses a 64-bit table S to perform an S-Box substitution for each nibble of the expanded output 508. Fig. 5 illustrates example of such a table 520 where, on a nibble-by-nibble basis, the value S($x$) of a 4-bit S-Box is indicated for a given input $x$. It should be understood that the teachings herein are not limited to this particular table S and that other table values and/or sizes can be used in other implementations.

This table lookup is represented mathematically in FIG. 5 by S(x). Thus, in the $\gamma$ description 518, the S-Box substitution for the least significant nibble $b_0$ of the expanded output 508 is represented by $S(b_0)$, the S-Box substitution for the next least significant nibble $b_1$ of the expanded output 508 is represented by $S(b_1)$, and so on. Thus, the output of the $\gamma$ function 510 may be represented as $S(b_{15}) | S(b_{14}) | ... | S(b_1) | S(b_0)$; where | denote concatenation of 4-bit values.

The rotation 514 rotates its input to the right by one nibble (i.e., by four bits). The operations are then repeated in the next round until all of the nibbles of the state 504 have been operated on. In practice, these operations are performed multiple times for the entirety of the state 504 to increase the diffusion and confusion characteristics of the ciphertext ultimately output by the cipher 500.

The cipher 500 can be implemented in software using standard instructions such as rotation, XOR, and bit shifts. An example of a set of instructions for a round is set forth in Equation 10.

*EQUATION 10*

```
#define ROR64(x,b) (((x) >> (b)) | ((x) << (64-(b))))
#define MASK 0xFFFFFFFFFFFFFFF0

const uint64_t sbox = 0x3F41B87D026C59EA ULL

state ^= key[i];

state ^= ROR(sbox, (state & 0xF) << 2) & MASK;

state = ROR(state, 4);
```

where ^= is an XOR operation, ROR is a rotate right operation, & is an AND operation, << is a bit shift left operation, state corresponds to the state 504, sbox is the table 520, MASK corresponds to the mask 524, and key is a cryptographic key.

The above code is very small: e.g., on the order of 25 instructions (totaling around 100 bytes) on a 64-bit Intel® central processing unit (CPU). It may be seen that there is no need for an explicit diffusion step. Furthermore, this type of design may be cryptanalysed with classical techniques, to provide tight security bounds.

In contrast to traditional table lookups, the rotation-based ciphers disclosed herein need not use secret cipher state indexes for data load instructions. Therefore, the data cache footprint of the cipher need not depend on the cipher state. Consequently, this design has natural immunity to cache-timing attacks.

**First Example - Inverse**

The inverse of the rotation-based cipher 500 of FIG. 5 performs similar operations as the cipher 500, except in an inverse order. For example, such an inverse cipher could be used to decrypt ciphertext generated by the cipher 500. As another example, the inverse cipher could be used to encrypt plaintext and the cipher 500 used to decrypt the resulting ciphertext.

A pseudocode example of a 64-bit block cipher (named "paul_decrypt") with such an inverse cipher function follows.

*EQUATION 11*

```
Mask = 0xFFFFFFFFFFFFFFF0ULL
void paul_decrypt(uint64_t ciphertext, uint64_t * plaintext, uint64_t key)
{
        int i;
        uint64_t state, boxvalue;
        int shift;

        state = ciphertext;

        state = state XOR key_ROUNDS              // initial key mixing


        for (i = ROUNDS-1; I >= 0; i--)
        {
          if (i <> ROUNDS - 1)
                state =  state <<< 4                        // rotate

          index = state & 0xF        // select S-Box from least significant 4 bits of state

          boxvalue = sbox >>> (index*4)

          state = state XOR (boxvalue AND Mask)

          state = state XOR key_i                 // key mixing

        }

        * plaintext = state;
}
```

As mentioned above, another operation, such as integer addition or subtraction can be used to perform the key mixing and/or the mixing of the rotated S-Box instead of an XOR operation. In such a case, the inverse of the function is used in the inverse cipher. For example, if addition is used in an encryption function, then subtraction is used in the corresponding place of the decryption function to ensure proper inversion. As another example, if subtraction is used in an encryption function, then addition is used in the corresponding place of the decryption function to ensure proper inversion.

The inverse cipher can be implemented in software using standard instructions such as rotation, XOR, and bit shifts. An example of a set of instructions for a round is set forth in Equation 12.

*EQUATION 12*

#define ROL64(x,b) (((x) << (b)) | ((x) >> (64-(b))))

#define MASK 0xFFFFFFFFFFFFFFF0

const uint64_t sbox = 0x3F41B87D026C59EA ULL

state = ROL(state, 4);

state ^= ROR(sbox, (state & 0xF) << 2) & MASK;

state ^= key[i];

where ^= is an XOR operation, ROL is a rotate left operation, ROR is a rotate right operation, & is an AND operation, << is a bit shift left operation, state corresponds to the state 504, sbox is the table 520, MASK corresponds to the mask 524, and key is a cryptographic key.

**Second Example**

In a second example of a cipher that uses the same type of rotation of a value (e.g., string, table, etc.) to create a wide S-box, masking is not employed when mixing the value into the state. This cipher is not a Feistel Network. In this example, inversion of the cipher is more involved since the least significant nibble is modified (as discussed above):

$$\text{new-state}[3..0] = \text{state}[3..0] \text{ XOR } S([\text{state}[3..0]]) \qquad\qquad EQUATION\ 13$$

Assuming the S-Box T defined by T[v] = v XOR S[v] is invertible, by passing new-state[3..0] through the inverse of T the original state can be recovered. Thus, the original shifted LARGE Sbox can be recovered and XORed to the whole state. Thus, in this example, S does not need to be invertible. However, the new S-Box T is invertible.
A pseudocode example of a 64-bit block cipher (named "paul2_encrypt") with such an encryption function follows.

*EQUATION 14*

Mask = 0xFFFFFFFFFFFFFFF0ULL
MASQ = 0xFEDCBA9876543210ULL
sbox = (MASQ XOR tbox)
tbox= 0xc19d02e574386bfaULL
tinv = 0x19cf20d473865aebULL

```
void paul_encrypt(uint64_t * ciphertext, uint64_t plaintext, uint64_t key)
{
        int i;
        uint64_t state, boxvalue;
        int shift;

        state = plaintext;

        for (i = 0; i <= ROUNDS - 1; i++)
        {
           state = state XOR key_i              // key mixing

           index = state & 0xF         // select S-Box from least significant 4 bits of state

           boxvalue = sbox >>> (index*4)

           state = state XOR boxvalue            // substitution and diffusion

           if (i <> ROUNDS - 1)
              state =  state >>> 4               // rotate
        }

        state = state XOR key_i              // output whitening

        * ciphertext = state;
}
```

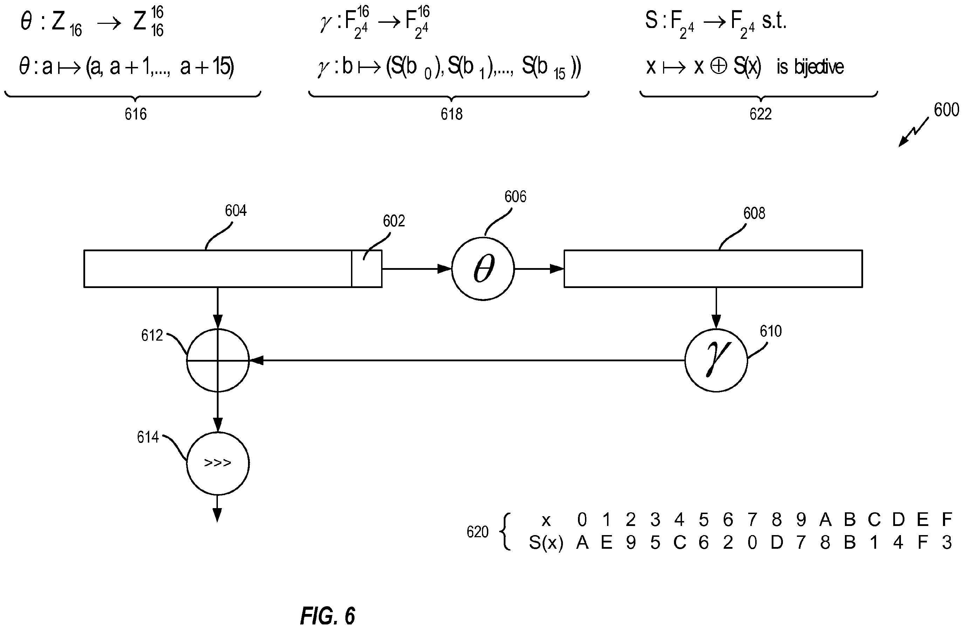

FIG. 6 is a conceptual representation of a rotation-based cipher 600 in accordance with the teachings herein. For a given round of the cipher 600, a subset 602 of the current state 604 is operated on by a θ function 606 to provide an expanded output 608. The expanded output 608 is operated on by a γ function 610, whereby the output of the γ function 610 is XORed 612 with the current state 604. The resulting output is then subject to rotation 614 to provide the state 604 for the next round of the cipher 600.

For purposes of illustration, the operation of the cipher 600 will be described in more detail in the context of an implementation that uses a 64-bit state parameter and 4-bit S-Boxes. It should be understood, however, that the teachings herein are not limited to such an implementation and that other state and S-Box sizes can be used in other implementations.

The 64-bit state 604 consists of 16 4-bit nibbles. For each round, one nibble is input to the θ function 606. The θ function 606 expands the 4-bit nibble of the subset 602 to provide a 64-bit expanded output 608. This operation is shown by the θ description 616 in FIG. 6. Here, an input *a* of 0x0 maps to {0x0, 0x1, 0x2, ... , 0xE, 0xF}, an input *a* of 0x1 maps to {0x1, 0x2, 0x3, ... , 0xF, 0x0}, and so on. The expanded output 608 may be represented as (a+15) | (a+14) | ... | (a+1) | a; where | denote concatenation of 4-bit values.

In some aspects, the θ function 606 is a linear layer that provides a diffusion function. Accordingly, relatively wide S-Boxes are created from compact table-based S-Boxes.

The γ function 610 performs a byte substitution operation as indicated by the γ description 618 in FIG. 6. In some aspects, the γ function 610 is a nonlinear layer that provides a confusion function. As indicated at 622, the S-Box is selected such that x → x XOR S(x) is bijective.

The γ function 610 uses a 64-bit table S to perform an S-Box substitution for each nibble of the expanded output 608. Fig. 6 illustrates example of such a table 620 where, on a nibble-by-nibble basis, the value S(x) of a 4-bit S-Box is indicated for a given input x. It should be understood that the teachings herein are not limited to this particular table S and that other table values and/or sizes can be used in other implementations.

This table lookup is represented mathematically in FIG. 6 by S(x). Thus, in the γ description 618, the S-Box substitution for the least significant nibble $b_0$ of the expanded output 608 is represented by S($b_0$), the S-Box substitution for the next least significant nibble $b_1$ of the expanded output 608 is represented by S($b_1$), and so on. Thus, the output of the γ function 610 may be represented as S($b_{15}$) | S($b_{14}$) | ... | S($b_1$)| S($b_0$); where | denote concatenation of 4-bit values.

The rotation 614 rotates its input to the right by one nibble (i.e., by four bits). The operations are then repeated in the next round until all of the nibbles of the state 604 have been operated on. In practice, these operations are performed multiple times for the entirety of the state 604 to increase the diffusion and confusion characteristics of the ciphertext ultimately output by the cipher 600.

The cipher 600 can be implemented in software using standard instructions such as rotation, XOR, and bit shifts. An example of a set of instructions for a round is set forth in Equation 15.

$$EQUATION\ 15$$

$$\#define\ ROR64(x,b)\ (((x) >> (b)) | ((x) << (64-(b))))$$

$$const\ uint64\_t\ sbox = 0x3F41B87D026C59EA\ ULL$$

$$state\ \texttt{\^{}}= key[i];$$

$$state\ \texttt{\^{}}= ROR(sbox,\ (state\ \&\ 0xF) << 2);$$

$$state = ROR(state,\ 4);$$

where ^= is an XOR operation, ROR is a rotate right operation, & is an AND operation, << is a bit shift left operation, state corresponds to the state 604, sbox is the table 620, and key is a cryptographic key.

Again, the above code is very small: e.g., 25 instructions (totaling 100 bytes) on a 64-bit Intel® CPU. In some aspects, the above cipher may have faster encryption and better diffusion than the first example cipher. This better diffusion may enable the use of fewer rounds. However, as shown below, the round function in the decryption is more complex and, hence, is generally slower than the round function in the decryption in the first example cipher.

The second example cipher is not a Feistel cipher (the "branch" used to determine the S-Box value is also substituted). In addition, the cipher is not a substitution-permutation network (SPN).

In the above "paul2_encrypt" cipher, the map x -> x XOR S[X] is bijective, so that the proper index can be recovered. However, the property that the original S-Box be bijective (in this case equivalent to injective) is not strictly necessary. Thus, in some aspects, non-injective S-Boxes can be applied to a non-Feistel construction.

For the above "paul2_encrypt" cipher, decryption uses a second table that provides $x + S(x)$. Alternatively, the roles of decryption and encryption can be swapped. For example, such a swap may be implemented in a case where decryption occurs on a device that is more computationally limited than the device where encryption occurs.

**Second Example - Inverse**

The inverse of the rotation-based cipher 600 of FIG. 6 performs similar operations as the cipher 600, except in an inverse order, while using the S-Box T as described above. Such an inverse cipher could be used, for example, to decrypt ciphertext generated by the cipher 600. As another example, the inverse cipher could be used to encrypt plaintext and the cipher 600 used to decrypt the resulting ciphertext.

A pseudocode example of a 64-bit block cipher (named "paul2_decrypt") with such an inverse cipher function follows.

EQUATION 16

```
void paul2_decrypt(uint64_t ciphertext, uint64_t * plaintext, uint64_t key)
{
        int i;
        uint64_t state, boxvalue;
        int shift;

        state = ciphertext;

        state = state XOR key_i

        for (i = ROUNDS - 1; i >= 0; i--)
        {
           if (i <> ROUNDS-1)
                state =  state <<< 4                    // rotate

        index = state & 0xF

        shift = ((tinv >> (index << 2)) & 0xF) << 2

        boxvalue = sbox >>> (shift)

        state = state XOR (boxvalue )

        state = state XOR key_i                        // key mixing


                                   }

                           * plaintext = state;
                   }
```

The inverse cipher can be implemented in software using standard instructions such as rotation, XOR, and bit shifts. An example of a set of instructions for a round is set forth in Equation 1.

EQUATION 17

```
#define ROL64(x,b) (((x) << (b)) | ((x) >> (64-(b))))


const uint64_t tinv = 0x19cf20d473865aeb ULL

const uint64_t sbox = 0x3F41B87D026C59EA ULL


state = ROL(state, 4);

shift = (tinv >> ((state & 0xF) << 2)) << 2;

state ^= ROR(sbox, shift);

state ^= key[i];
```

where ^= is an XOR operation, ROL is a rotate left operation, ROR is a rotate right operation, & is an AND operation, >> is a bit shift right operation, << is a bit shift left operation, state corresponds to the state 604, sbox is the table 620, and key is a cryptographic key.

**Additional Aspects**

The teachings herein are applicable to "wide" S-Boxes, in general, not just the specific example described herein. For example, the masking can be used to truncate to smaller sizes.

If the starting point is an n-bit S-Box S, the S-Box can be "expanded" to an m-byte wide S-Box by mapping: x -> S[x+m-1] | ... | S[x+1] | S[x], where | is concatenation.

If m is not too large (e.g., smaller than 2^n) and S has good arithmetic differential properties, the cipher may be relatively secure. This is essentially the same construction as above, but "truncated."

The teachings herein are not limited to S-Boxes with a 4-bit input. For instance, the mapping may be from 4 bits to n bits. As a specific example, where 4 < n < 64, such a mapping can be achieved by mapping:

$$V \rightarrow \mathrm{ROT}(sbox, 4*v), \text{ truncated to n bits} \qquad EQUATION\ 18$$

For a truncation of 4 to 16 bits, the following mapping can be used:

$$V \rightarrow \mathrm{ROT}(sbox, 4*v)\ \&\ \mathrm{0xFFFF}, \text{ used as a 16 bit word} \qquad EQUATION\ 19$$

Other mappings would be used for truncations for other values of n.

For example, applications for the disclosed rotation-based ciphers include ciphers based on 8-bit S-Boxes. For a 128-bit block cipher with a scheme similar to the "paul_encrypt" cipher above, 16 consecutive values can be used. To avoid "wrapping around" when reading the table, a 271 byte table can be used instead of a 256 byte table.

8 bit S-Boxes can be stored as an array of 256 bytes T[0..255]. Consequently, a 8-to-32 bit S-Box can be created in the fashion of Bruce Schneier's Blowfish or Carlisle Adams and Stafford Tavares's CAST (CAST 128 or CAST 256) as:

$$V \rightarrow S[v+3] \mid S[v+2] \mid S[v+1] \mid S[v] \qquad EQUATION\ 20$$

Here the indexes are (this is comparable to taking a 256*8 bit "sbox" string and rotating it, and then keeping only a few bits) either interpreted mod 256, or the table itself is actually 259 bytes long and the last three bytes replicate the first three, so that indexes are not to be wrapped modulo 256.

For hardware implementations, the same circuit can be reused 4 times either in parallel or serially (e.g., by incrementing the index v each time).

Of note, the Blowfish or CAST S-Boxes are generated as full tables, not a rotating value. Thus, the Blowfish or CAST S-Boxes may be much larger than S-Boxes employed in accordance with the teachings herein in some implementations.

**Comparison with DES**

As discussed above, for 4-bit S-Boxes, a single 64-bit register can be used to represent 16 4-bit entries. The different entries are obtained by different rotations of the register. Thus, rather than using a table lookup (e.g., as in DES), substitution is achieved by much more efficient, from a software perspective, rotation operation.

Continuing with an example that uses 4-bit S-Boxes. These S-Boxes have 16 entries and therefore contain 64 bits of information. The map x -> S[x] is a table lookup. By using a register Y that contains all 64 bits, the following equation can be used as discussed above:

$$EQUATION\ 21$$

$$S[x] = (Y >>> (4*x))\ \&\ \mathrm{0xF},$$

where ">>>" denoted cyclic rotation to the right.

A DES S-Box S0 can be built using 4 bijective 4-bit S-Boxes. The 0-th S-Box is represented by the following:

*EQUATION 22*

| x | 0 1 2 3 4 5 6 7 8 9 A B C D E F |
|---|---|
| S00(x) | E 4 D 1 2 F B 8 3 A 6 C 5 9 0 7 |

DES involves a memory resident table lookup such as:

*EQUATION 23*

static const unsigned char S00[16] = {

0xE,0x4,0xD,0x1,0x2,0xF,0xB,0x8,0x3,0xA,0x6,0xC,0x5,0x9,0x0,0x7

}

DES then performs substitutions such as: y = S00[x & 0xF]. In contrast, in accordance with the teachings herein, a shift of a constant is used instead:

*EQUATION 24*

$$y = (0x7095C6A38BF21D4E >> ((x \& 0xF) << 2)) \& 0xF$$

Here, the cipher is designed around the mapping: S'[x] = Y >>> (4*x). An alternate implementation could use a 124-bit register Z where the 64 least significant bits of Z are Y and the least significant 60 bits of Y are copies in the upper 60 bits of Z. S' can be implemented as the 64 least significant bits of Z >> (4x), where ">>" is a simple right shift.

Advantageously, the above operations can be executed relatively quickly in software. Most commodity microprocessors feature a rotation instruction where the rotation distance is taken from a register, i.e., not a constant rotation but a variable rotation. In hardware, the above operations are a simple bit selection.

**Example Processing Circuits for Encipher and Decipher Operations**

In view of the above, in some aspects, the disclosure relates to a processing circuit that performs the operations of Equation 10, Equation 12, Equation 15, Equation 17 or any other operations taught herein.

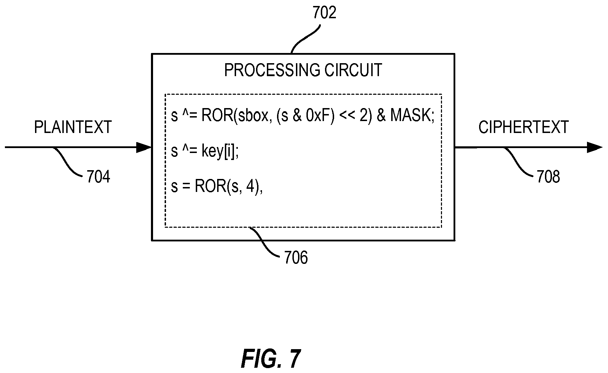

FIG. 7 illustrates an example of a processing circuit 702 that operates on plaintext 704 using an equation 706 similar to Equation 10 to generate ciphertext 708. Thus, FIG. 7 corresponds to encipher (encryption) operations.

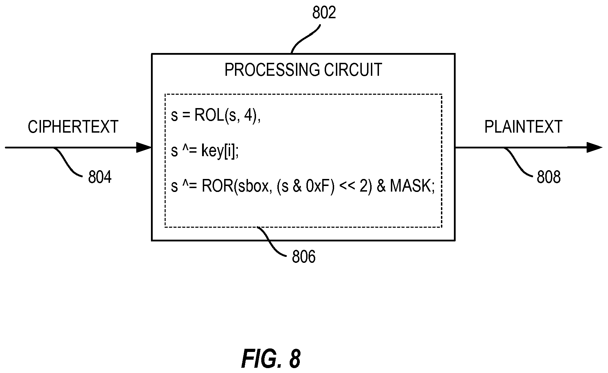

FIG. 8 illustrates an example of a processing circuit 802 that operates on ciphertext 804 using an equation 806 similar to Equation 12 to generate plaintext 808. Thus, FIG. 8 corresponds to decipher (decryption) operations.

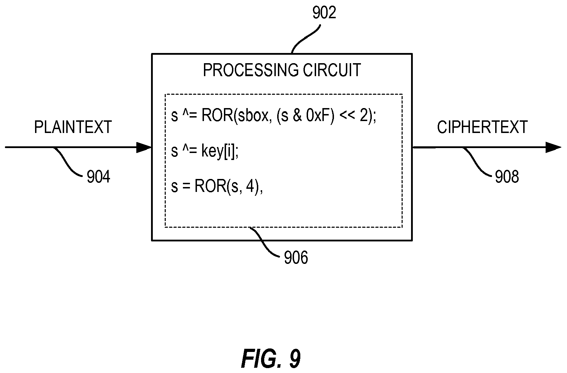

FIG. 9 illustrates an example of a processing circuit 902 that operates on plaintext 904 using an equation 906 similar to Equation 15 to generate ciphertext 908. Thus, FIG. 9 corresponds to encipher (encryption) operations.

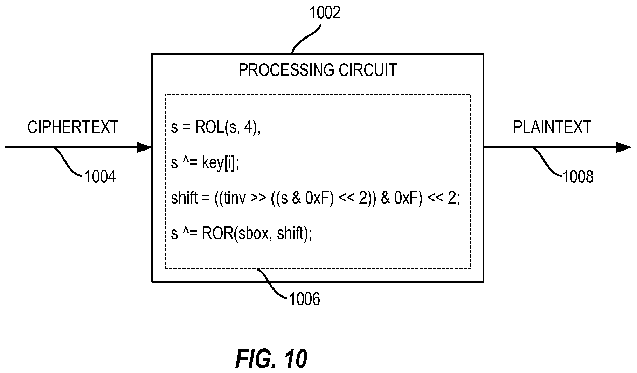

FIG. 10 illustrates an example of a processing circuit 1002 that operates on ciphertext 1004 using an equation 1006 similar to Equation 17 to generate plaintext 1008. Thus, FIG. 10 corresponds to decipher (decryption) operations.

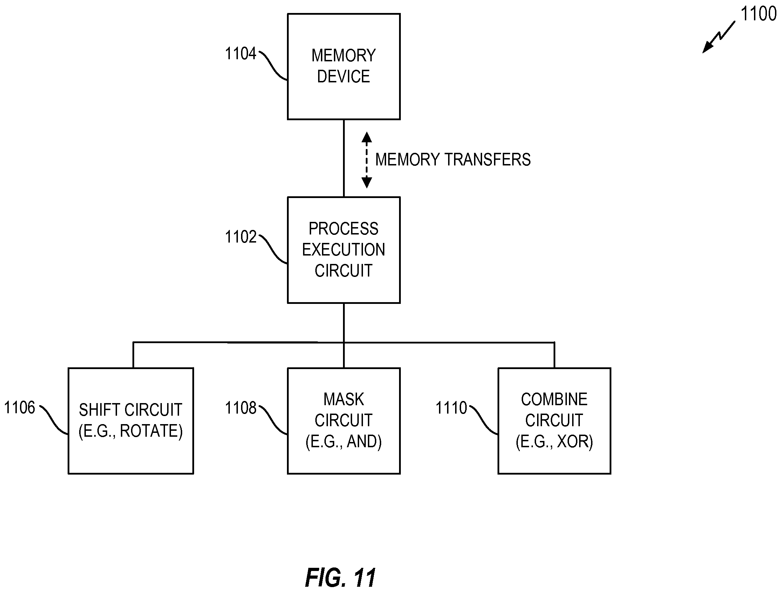

FIG. 11 illustrates a non-limiting example of circuitry 1100 that could be implemented by the processing circuit 702, 802, 902, or 1002. A process execution circuit 1102 controls execution of instructions stored in a memory device 1104. Thus, depending on the instruction currently being executed, various circuitry may be invoked to operate on data retrieved from the memory device 1104. As indicated, this circuitry can include a shift circuit 1106 (e.g., that performs a simple shift operation or a rotate operation), a mask circuit 1108 (e.g., that performs an AND operation), and a combine circuit 1110 (e.g., that performs an XOR operation).

**Example Electronic Device**

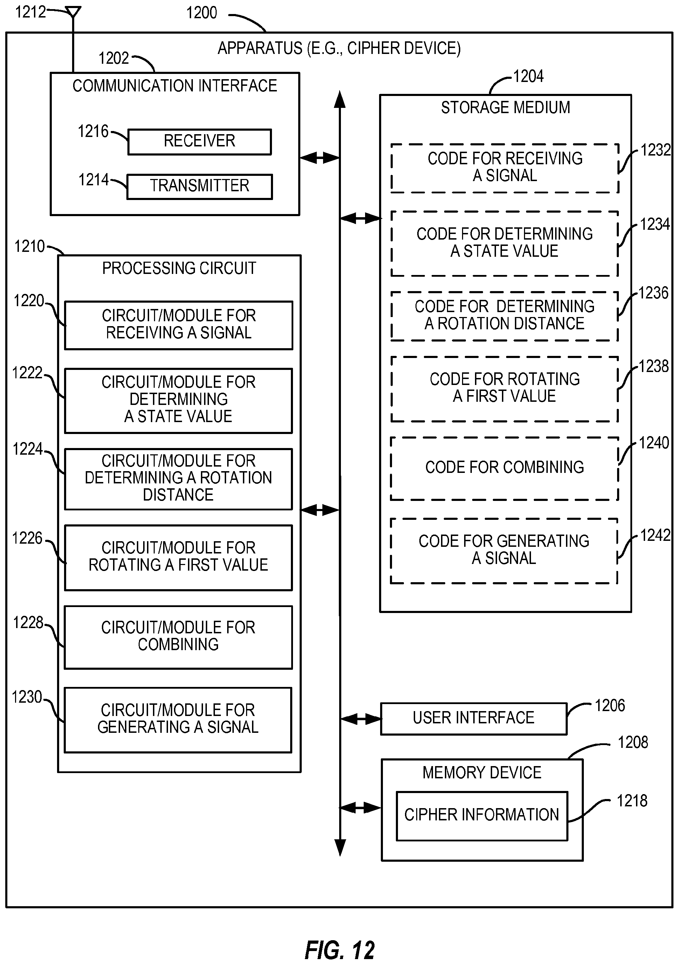

FIG. 12 is an illustration of an apparatus 1200 configured to support cipher operations according to one or more aspects of the disclosure. The apparatus 1200 includes a communication interface (e.g., at least one transceiver) 1202, a storage medium 1204, a user interface 1206, a memory device 1208, and a processing circuit 1210.

These components can be coupled to and/or placed in electrical communication with one another via a signaling bus or other suitable component, represented generally by the connection lines in FIG. 12. The signaling bus may include any number of interconnecting buses and bridges depending on the specific application of the processing circuit 1210 and the overall design constraints. The signaling bus links together various circuits such that each of the communication interface 1202, the storage medium 1204, the user interface 1206, and the memory device 1208 are coupled to and/or in electrical communication with the processing circuit 1210. The signaling bus may also link various other circuits (not shown) such as timing sources, peripherals, voltage regulators, and power management circuits, which are well known in the art, and therefore, will not be described any further.

The communication interface 1202 may be adapted to facilitate wireless communication of the apparatus 1200. For example, the communication interface 1202 may include circuitry and/or code (e.g., instructions) adapted to facilitate the communication of information bi-directionally with respect to one or more communication devices in a network. The communication interface 1202 may be coupled to one or more antennas 1212 for wireless communication within a wireless communication system. The communication interface 1202 can be configured with one or more standalone receivers and/or transmitters, as well as one or more transceivers. In the illustrated example, the communication interface 1202 includes a transmitter 1214 and a receiver 1216.

The memory device 1208 may represent one or more memory devices. As indicated, the memory device 1208 may maintain cipher information 1218 along with other information used by the apparatus 1200. In some implementations, the memory device 1208 and the storage medium 1204 are implemented as a common memory component. The memory device 1208 may also be used for storing data that is manipulated by the processing circuit 1210 or some other component of the apparatus 1200.

The storage medium 1204 may represent one or more computer-readable, machine-readable, and/or processor-readable devices for storing code, such as processor executable code or instructions (e.g., software, firmware), electronic data, databases, or other digital information. The storage medium 1204 may also be used for storing data that is manipulated by the processing circuit 1210 when executing code. The storage medium 1204 may be any available media that can be accessed by a general purpose or special purpose processor, including portable or fixed storage devices, optical storage devices, and various other mediums capable of storing, containing or carrying code.

By way of example and not limitation, the storage medium 1204 may include a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read only memory (ROM), a programmable ROM (PROM), an erasable PROM (EPROM), an electrically erasable PROM (EEPROM), a register, a removable disk, and any other suitable medium for storing code that may be accessed and read by a computer. The storage medium 1204 may be embodied in an article of manufacture (e.g., a computer program product). By way of example, a computer program product may include a computer-readable medium in packaging materials. In view of the above, in some implementations, the storage medium 1204 may be a non-transitory (e.g., tangible) storage medium.

The storage medium 1204 may be coupled to the processing circuit 1210 such that the processing circuit 1210 can read information from, and write information to, the storage medium 1204. That is, the storage medium 1204 can be coupled to the processing circuit 1210 so that the storage medium 1204 is at least accessible by the processing circuit 1210, including examples where at least one storage medium is integral to the processing circuit 1210 and/or examples where at least one storage medium is separate from the processing circuit 1210 (e.g., resident in the apparatus 1200, external to the apparatus 1200, distributed across multiple entities, etc.).

Code stored by the storage medium 1204, when executed by the processing circuit 1210, causes the processing circuit 1210 to perform one or more of the various functions and/or process operations described herein. For example, the storage medium 1204 may include operations configured for regulating operations at one or more hardware blocks of the processing circuit 1210, as well as to utilize the communication interface 1202 for wireless communication utilizing their respective communication protocols.

The processing circuit 1210 is generally adapted for processing, including the execution of such code stored on the storage medium 1204. As used herein, the term "code" or "instructions" shall be construed broadly to include without limitation programming, instructions, instruction sets, data, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The processing circuit 1210 is arranged to obtain, process and/or send data, control data access and storage, issue commands, and control other desired operations. The processing circuit 1210 may include circuitry configured to implement desired code provided by appropriate media in at least one example. For example, the processing circuit 1210 may be implemented as one or more processors, one or more controllers, and/or other structure configured to execute executable code. Examples of the processing circuit 1210 may include a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general purpose processor may include a microprocessor, as well as any conventional processor, controller, microcontroller, or state machine. The processing circuit 1210 may also be implemented as a combination of computing components, such as a combination of a DSP and a microprocessor, a number of microprocessors, one or more microprocessors in conjunction with a DSP core, an ASIC and a microprocessor, or any other number of varying configurations. These examples of the processing circuit 1210 are for illustration and other suitable configurations within the scope of the disclosure are also contemplated.

According to one or more aspects of the disclosure, the processing circuit 1210 may be adapted to perform any or all of the features, processes, functions, operations and/or routines for any or all of the apparatuses described herein. As used herein, the term "adapted" in relation to the processing circuit 1210 may refer to the processing circuit 1210 being one or more of configured, employed, implemented, and/or programmed to perform a particular process, function, operation and/or routine according to various features described herein.

According to at least one example of the apparatus 1200, the processing circuit 1210 may include one or more of a circuit/module for receiving a signal 1220, a circuit/module for determining a state value 1222, a circuit/module for determining a rotation distance 1224, a circuit/module for rotating a substitution box value 1226, a circuit/module for combining 1228, and a circuit/module for generating a signal 1230.

The circuit/module for receiving a signal 1220 may include circuitry and/or code (e.g., code for receiving a signal 1232 stored on the storage medium 1204) adapted to perform several functions relating to, for example, receiving plaintext, cipher text, or other information in the form of an electrical signal. Initially, the circuit/module for receiving a signal 1220 obtains received information. For example, the circuit/module for receiving a signal 1220 may obtain this data directly from a component of the apparatus (e.g., the receiver 1216, the memory device 1208, or some other component). In some implementations, the circuit/module for receiving a signal 1220 identifies a memory location of a value in the memory device 1208 and invokes a read of that location. In some implementations, the circuit/module for receiving a signal 1220 processes the received information. The circuit/module for receiving a signal 1220 then outputs the received information (e.g., stores the information in the memory device 1208 or sends the information to another component of the apparatus 1200).

The circuit/module for determining a state value 1222 may include circuitry and/or code (e.g., code for determining a state value 1234 stored on the storage medium 1204) adapted to perform several functions relating to, for example, obtaining a state value to be used for a given instance of an iterative cipher. In some implementations, an initial state value is combined with a cryptographic key. Upon obtaining the state value, the circuit/module for determining a state value 1222 enables the value to be operated on by a cipher (e.g., stores the indication in the memory device 1208 or sends the indication to another component of the apparatus 1200).

The circuit/module for determining a rotation distance 1224 may include circuitry and/or code (e.g., code for determining a rotation distance 1236 stored on the storage medium 1204) adapted to perform several functions relating to, for example, calculating a rotation value (i.e., a number) from the state value determined by the circuit/module for determining a state value 1222. In some implementations, this involves obtaining (e.g., masking off) a subset of the state value, expanding the subset, and determining at least one rotation value (e.g., a set of rotation values) from the expanded value. Upon obtaining the state value, the circuit/module for determining a rotation distance 1224 passes the value to another operation (e.g., stores the indication in the memory device 1208 or sends the indication to another component of the apparatus 1200).

The circuit/module for rotating a substitution box value 1226 may include circuitry and/or code (e.g., code for rotating a substitution box value 1238 stored on the storage medium 1204) adapted to perform several functions relating to, for example, performing a rotation operation. The circuit/module for rotating a substitution box value 1226 obtains the rotation distance and the substitution box value, and rotates (e.g., shifts) the substitution box value by the desired number of bits. The circuit/module for rotating a substitution box value 1226 then outputs the rotated value (e.g., stores the value in the memory device 1208 or sends the indication to another component of the apparatus 1200).

The circuit/module for combining 1228 may include circuitry and/or code (e.g., code for combining 1240 stored on the storage medium 1204) adapted to perform several functions relating to, for example, combining a rotated substitution box value with a state value. The circuit/module for combining 1228 obtains the rotated substitution box value and the state value, and combines (e.g., XORs) the two values. The circuit/module for combining 1228 then outputs the combined value (e.g., stores the value in the memory device 1208 or sends the indication to another component of the apparatus 1200).

The circuit/module for generating a signal 1230 may include circuitry and/or code (e.g., code for generating a signal 1242 stored on the storage medium 1204) adapted to perform several functions relating to, for example, generating a subsequent or a final iteration of a state value. In some implementations, the circuit/module for generating a signal 1230 combines the iteration of the state value with a cryptographic key. The circuit/module for generating a signal 1230 then generates a signal corresponding to the value and outputs the signal (e.g., stores the value in the memory device 1208 or sends the indication to another component of the apparatus 1200).

As mentioned above, code stored by the storage medium 1204, when executed by the processing circuit 1210, causes the processing circuit 1210 to perform one or more of the various functions and/or process operations described herein. For example, the storage medium 1204 may include one or more of the code for receiving a signal 1232, the code for determining a state value 1234, the code for determining a rotation distance 1236, the code for rotating a substitution box value 1238, the code for combining 1240, and the code for generating a signal 1242.

**Example Processes**

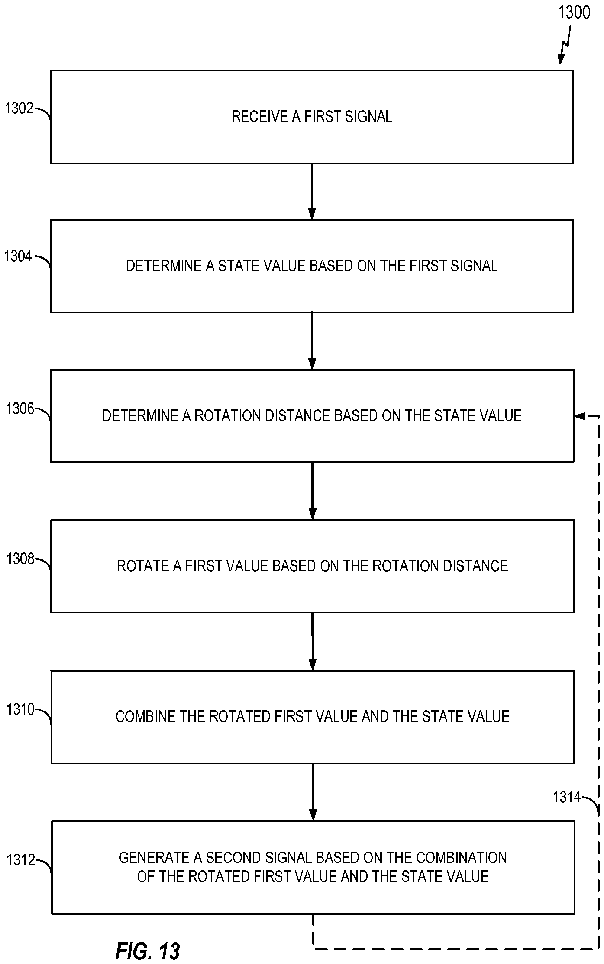

FIG. 13 illustrates a cipher process 1300 in accordance with some aspects of the disclosure. The process 1300 may take place within a processing circuit (e.g., the processing circuit 702 of FIG. 7, the processing circuit 802 of FIG. 8, the processing circuit 902 of FIG. 9, the processing circuit 1002 of FIG. 10, or the processing circuit 1210 of FIG. 12), which may be located in an electronic device, a transceiver, or some other suitable apparatus. Of course, in various aspects within the scope of the disclosure, the process 1300 may be implemented by any suitable apparatus capable of supporting cipher operations.

At block 1302, a first signal is received. For example, a processing circuit may retrieve data (e.g., plaintext or ciphertext) from a memory device.

At block 1304, a state value is determined based on the first signal.

In some implementations, information (e.g., plaintext or ciphertext) to be ciphered is combined with a cryptographic key prior to the operations of blocks 1306 - 1312. For example, in some aspects (e.g., for an encryption operation), the determination of the state value at block 1304 involves generating a current instance of the state value by combining a cryptographic key and a previous instance of the state value. As discussed herein, combining may include an XOR operation, an addition operation, a subtraction operation, some other operation, or a combination of one or more of these operations.

In some implementations, information (e.g., plaintext or ciphertext) to be ciphered is rotated prior to the operations of blocks 1306 - 1312. For example, in some aspects (e.g., for a decryption operation), the determination of the state value at block 1304 involves generating a current instance of the state value by rotating a previous instance of the state value.

At block 1306, a rotation distance is determined based on the state value. For example, the operations of block 1306 may correspond to determining the amount of the rotate right (ROR) to be performed at the second instruction of Equation 10, at the second instruction of Equation 12, at the second instruction of Equation 15, at the second and third instructions of Equation 17, by the $\gamma$ function 510 of FIG. 5, or by the $\gamma$ function 610 of FIG. 66.

The determination of the rotation distance of block 1308 may be performed in different ways in different implementations. In some aspects, the determination of the rotation distance may be based a subset of the state value. In some aspects, the determination of the rotation distance may include: selecting a subset of bits from the state value; determining a first number that corresponds to the selected subset of bits; determining a second number that corresponds to a quantity of bits of the substitution box value; and multiplying the first number by the second number. In some aspects, the determination of the rotation distance may include: masking the state value, and shifting the masked state value. In some aspects, the determination of the rotation distance may further include: shifting a second value based on the shifted masked state value, masking the shifted second value, and shifting the masked shifted second value.

At block 1308, a first value (e.g., a substitution box value) is rotated based on the rotation distance determined at block 1306. In some aspects, the first value may be a substitution box value (e.g., a value from an S-Box, a value derived from an S-Box, or a value used to generate an S-Box). In some aspects, the first value may have a value such that the combination of the rotated substitution box value and the state value is bijective. In some aspects, the first value may be bijective.

The rotating of block 1308 may be performed in different ways in different implementations. In some aspects, the rotating of block 1308 may involve a rotation instruction.

At block 1310, the rotated first value is combined with the state value. In some aspects, the rotating of block 1308 and the combining of block 1310 may impart nonlinearity on the state value and diffuse the combination within a subsequent instance of the state value. The rotating of block 1308 and the combining of block 1310 may be combined in a single instruction (e.g., as in Equation 10, 12, 15, or 17) in some implementations.

The combining of block 1310 may be performed in different ways in different implementations. In some aspects, the combining may include masking the rotated first value, and combining the masked rotated first value and the state value. In some aspects, the combining may include generating an interim instance of the state value by combining the rotated first value and the state value. Again, as discussed herein, combining may include an XOR operation, an addition operation, a subtraction operation, some other operation, or a combination of one or more of these operations.

At block 1312, a second signal is generated based on the combination of the rotated first value and the state value from block 1310. For example, a processing circuit may store the resulting state value in a memory device.

The signal generation of block 1312 may be performed in different ways in different implementations. In some aspects (e.g., for an encryption operation), the generation of the second signal may include generating a subsequent instance of the state value by rotating the interim instance of the state value. The interim instance of the state value may be rotated by a quantity of bits that is based on a quantity of bits of the substitution box value. In some aspects (e.g., for a decryption operation), the generation of the interim instance of the state value may include combining a cryptographic key with the combination of the rotated first value and the state value.

As represented by the dashed line 1314, the operations of block 1306 - 1312 may be repeated until a desired level of diffusion and confusion is imparted on the state value. Thus, the determination of the rotation distance, the rotation of the substitution box value, and the combining of the rotated substitution box value and the state value may be performed on an iterative basis to generate the second signal based on the received first signal.

As discussed above in conjunction with FIG. 5, for the first cipher, the determination of the rotation distance, the rotation of the first value, and the combination of the rotated first value with the state value may be performed by operations: s ^= ROR(sbox, (s & M1) << S1) & MASK, and s = ROR(s, R1), where ^= is an XOR operation, ROR is a rotate right operation, & is an AND operation, << is a bit shift left operation, s corresponds to instances of the state value, M1 is a first mask value (e.g., 0xF), MASK is a second mask value, S1 is a shift value (e.g., 2), R1 is a rotation value (e.g., 4), and sbox corresponds to instances of the first value.

Also discussed above in conjunction with FIG. 5, for the inverse of the first cipher, the determination of the rotation distance, the rotation of the first value, and the combination of the rotated first value with the state value may be performed by operations: s = ROL(s, R1), and s ^= ROR(sbox, (s & M1) << S1) & MASK, where ^= is an XOR operation, ROL is a rotate left operation, ROR is a rotate right operation, & is an AND operation, << is a bit shift left operation, s corresponds to instances of the state value, M1 is a first mask value (e.g., 0xF), MASK is a second mask value, R1 is a rotation value (e.g., 4), S1 is a shift value (e.g., 2), and sbox corresponds to instances of the first value.

As discussed above in conjunction with FIG. 6, for the second cipher, the determination of the rotation distance, the rotation of the first value, and the combination of the rotated first value with the state value may be performed by operations: s ^= ROR(sbox, (s & M1) << S1), and s = ROR(s, R1), where ^= is an XOR operation, ROR is a rotate right operation, & is an AND operation, << is a bit shift left operation, s corresponds to instances of the state value, M1 is a mask value (e.g., 0xF), S1 is a shift value (e.g., 2), R1 is a rotation value (e.g., 4), and sbox corresponds to instances of the first value.

Also discussed above in conjunction with FIG. 6, for the inverse of the second cipher, the determination of the rotation distance, the rotation of the first value, and the combination of the rotated first value with the state value may be performed by operations: s = ROL(s, R1), shift = (tinv >> ((state & M1) << S1)) << S2, and s ^= ROR(sbox, shift), where ^= is an XOR operation, ROL is a rotate left operation, ROR is a rotate right operation, & is an AND operation, << is a bit shift left operation, >> is a bit shift right operation, s corresponds to instances of the state value, M1 is a mask value (e.g., 0xF), S1 is a first shift value (e.g., 2), S2 is a second shift value (e.g., 2), R1 is a first rotation value (e.g., 4), shift is a second rotation value, tinv is an inverse substitution box value, and sbox corresponds to instances of the first value.

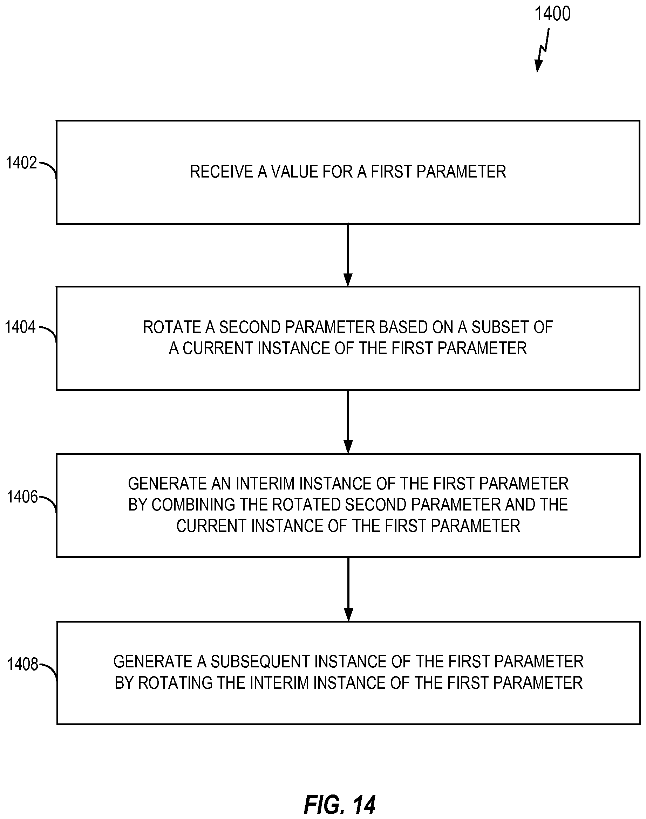

FIG. 14 illustrates another example of a cipher process 1400 in accordance with some aspects of the disclosure. The process 1400 may take place within a processing circuit (e.g., the processing circuit 702 of FIG. 7, the processing circuit 902 of FIG. 9, or the processing circuit 1210 of FIG. 12), which may be located in an electronic device, a transceiver, or some other suitable apparatus. Of course, in various aspects within the scope of the disclosure, the process 1400 may be implemented by any suitable apparatus capable of supporting cipher operations.

At block 1402, a value for a first parameter is received. For example, a cipher device may receive plaintext that is to be encrypted. As another example, a cipher device may receive ciphertext that is to be decrypted. This plaintext or ciphertext may thus serve as the first instance of a state parameter (first parameter) used in the cipher process 1400. In some aspects, plaintext or ciphertext may be XORed with a cryptographic key to provide the first instance of the state parameter for a given round (e.g., as in the above "paul" ciphers).

At block 1404, a second parameter is rotated based on a subset of a current instance of the first parameter. For example, an S-Box vector (second parameter) can be rotated by an amount that is based on a nibble of the state parameter. In some aspects, the rotation of the second parameter based on a subset of a current instance of the first parameter includes: selecting a subset of bits from the current instance of the first parameter; and multiplying the selected subset of bits by a number (e.g., four) that corresponds to a quantity of bits (e.g., four bits) in a given one of the substitution boxes.

At block 1406, an interim instance of the first parameter is generated by combining the result of block 1404 and the current instance of the first parameter. For example, a new value for the state parameter can be generated by combining the S-Box vector and the state parameter. It should be appreciated that the operations of blocks 1404 - 1406 can be performed, for example, at the second instruction of Equation 10, or at the second instruction of Equation 15.

In some aspects, the generation of the interim instance of the first parameter also includes combining a cryptographic key and this new value of the state parameter (e.g., see Equation 10). This aspect of the operations of block 1406 can be performed, for example, as shown at the second instruction line of equation 706 of FIG. 7 or the second instruction line of equation 906 of FIG. 9.

At block 1408, a subsequent instance of the first parameter is generated by rotating the interim instance of the first parameter. For example, the new value for the state parameter generated at block 1406 can be rotated by a defined number of bits. In some aspects, the interim instance of the first parameter is rotated by a quantity of bits corresponding to a quantity of bits (e.g., four bits) in a given one of the substitution boxes. The operations of block 1406 can be performed, for example, at the third instruction of Equation 10, or at the third instruction of Equation 15.

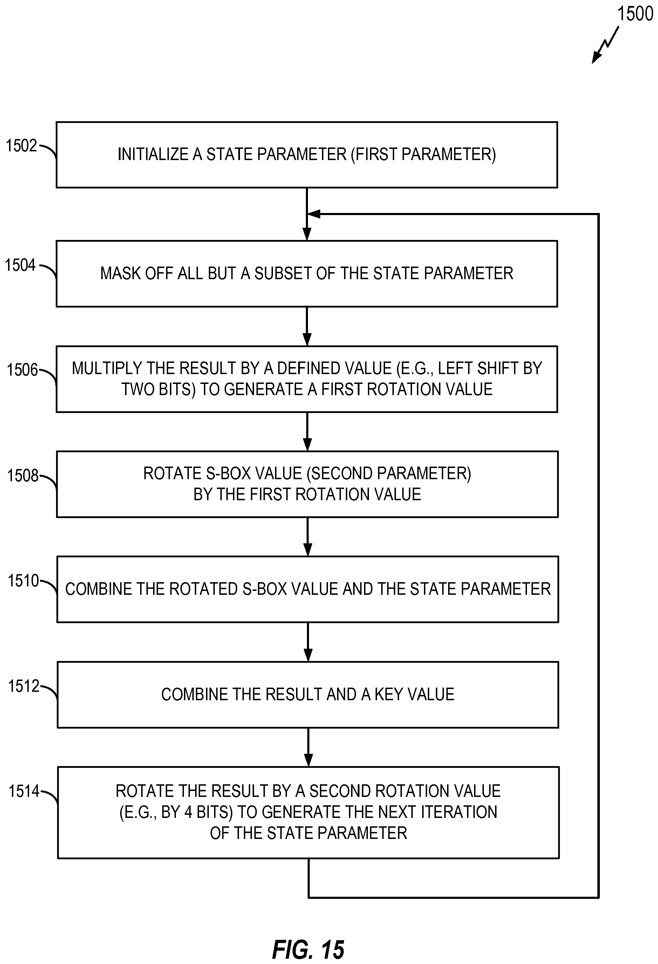

FIG. 15 illustrates a cipher process 1500 that provides a more detailed example of the cipher process 1300 of FIG. 13 in accordance with some aspects of the disclosure. The process 1500 may take place within a processing circuit (e.g., the processing circuit 702 of FIG. 7, the processing circuit 902 of FIG. 9, or the processing circuit 1210 of FIG. 12), which may be located in an electronic device, a transceiver, or some other suitable apparatus. Of course, in various aspects within the scope of the disclosure, the process 1500 may be implemented by any suitable apparatus capable of supporting cipher operations.

At block 1502, a state parameter is initialized. For example, the operations of block 1502 may correspond to the operations of block 1302 of FIG. 13 whereby an initial value for the state parameter is based on an input value (e.g., plaintext or ciphertext).

At block 1504, all of the bits of the state parameter except for a subset of the state parameter (e.g., one) nibble are masked off. As shown in Equations 10 and 12, this may be achieved by ANDing the state parameter and the value 0xF.

At block 1506, the result of block 1504 is multiplied by a defined value (e.g., four) to generate a first rotation value. As shown in Equations 10 and 12, this may be achieved shifting the result of the AND operation to the left by two bits.

At block 1508, an S-Box value (e.g., vector) is rotated to the right by the number of bits specified by the first rotation value generated at block 1506.

At block 1510, the result of block 1508 is combined (e.g., XORed) with the state parameter to provide an updated value for the state parameter. It should be appreciated that the operations of blocks 1504 - 1510 can be performed, for example, at the second instruction line of Equation 10 or Equation 15.

At block 1512, the result of block 1510 is combined (e.g., XORed) with a cryptographic key value to provide another updated value for the state parameter. The operations of block 1512 can be performed, for example, as shown at the second instruction line of equation 706 of FIG. 7 or the second instruction line of equation 906 of FIG. 9. As indicated in the "paul" ciphers described above, for example, the state parameter may be XORed with a key value at other parts of the cipher.

At block 1514, the result of block 1512 is rotated to the right according to a second rotation value to provide the next iteration of the state parameter for the next round of the cipher. The operations of block 1514 can be performed, for example, at the third instruction line of Equation 10 or 15.

The operations of blocks 1504 to 1514 are performed on an iterative basis to generate an encrypted value (ciphertext) based on the input value (plaintext) or to generate a decrypted value (plaintext) based on the input value (ciphertext).

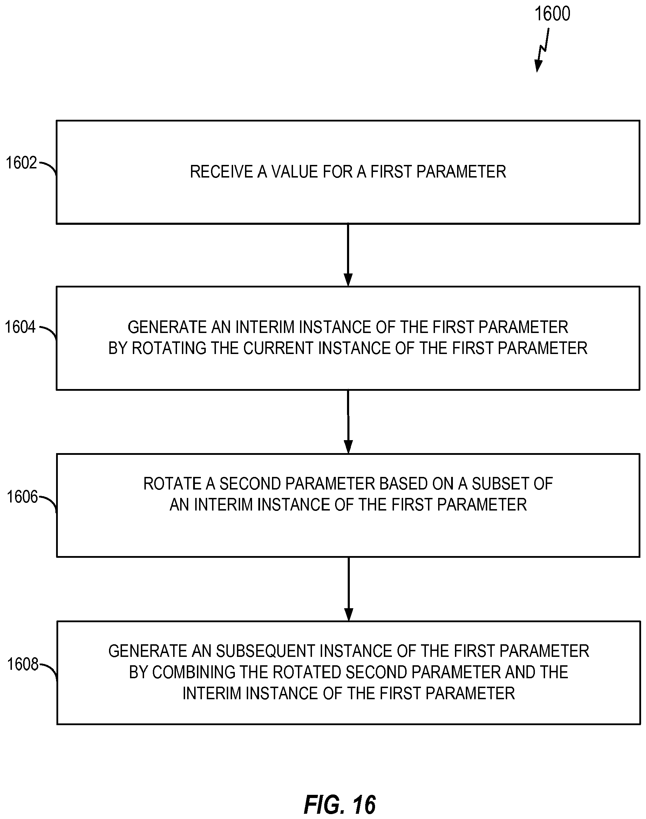

FIG. 16 illustrates another cipher process 1600 in accordance with some aspects of the disclosure. The process 1600 is the inverse of the process 1400 of FIG. 14. For example, the process 1400 could be used for encryption and the process 1600 used for decryption, or vice versa.

The process 1600 may take place within a processing circuit (e.g., the processing circuit 802 of FIG. 8, processing circuit 1002 of FIG. 10, or the processing circuit 1210 of FIG. 12), which may be located in an electronic device, a transceiver, or some other suitable apparatus. Of course, in various aspects within the scope of the disclosure, the process 1600 may be implemented by any suitable apparatus capable of supporting cipher operations.

At block 1602, a value for a first parameter is received. For example, a cipher device may receive ciphertext that is to be decrypted. As another example, a cipher device may receive plaintext that is to be encrypted. This plaintext or ciphertext may thus serve as the first instance of a state parameter (first parameter) used in the cipher process 1600. In some aspects, plaintext or ciphertext may be XORed with a cryptographic key to provide the first instance of the state parameter (e.g., as in a "paul" cipher above).

At block 1604, an interim instance of the first parameter is generated by rotating the current instance of the first parameter. For example, the new current value of the state parameter can be rotated by a defined number of bits. In some aspects, the interim instance of the first parameter is rotated by a quantity of bits corresponding to a quantity of bits (e.g., four bits) in a given one of the substitution boxes. The operations of block 1606 can be performed, for example, at the first instruction line of Equation 12 or 17.

In some aspects, the generation of the interim instance of the first parameter also includes combining a cryptographic key and this new value of the state parameter (e.g., see Equation 12). This aspect of the operations of block 1604 can be performed, for example, as shown at the second instruction line of equation 806 of FIG. 8 or the second instruction line of equation 1006 of FIG. 10.

At block 1606, a second parameter is rotated based on a subset of an interim instance of the first parameter. For example, an S-Box vector (second parameter) can be rotated by an amount that is based on a nibble of the state parameter. In some aspects, the rotation of the second parameter based on a subset of a current instance of the first parameter includes: selecting a subset of bits from the current instance of the first parameter; and multiplying the selected subset of bits by a number (e.g., four) that corresponds to a quantity of bits (e.g., four bits) in a given one of the substitution boxes.

At block 1608, a subsequent instance of the first parameter is generated by combining the result of block 1606 and the interim instance of the first parameter. For example, a new value for the state parameter can be generated by combining the S-Box vector and the state parameter. It should be appreciated that the operations of blocks 1606 - 1608 can be performed, for example, at the second instruction line of Equation 12 or the third instruction line of Equation 17.

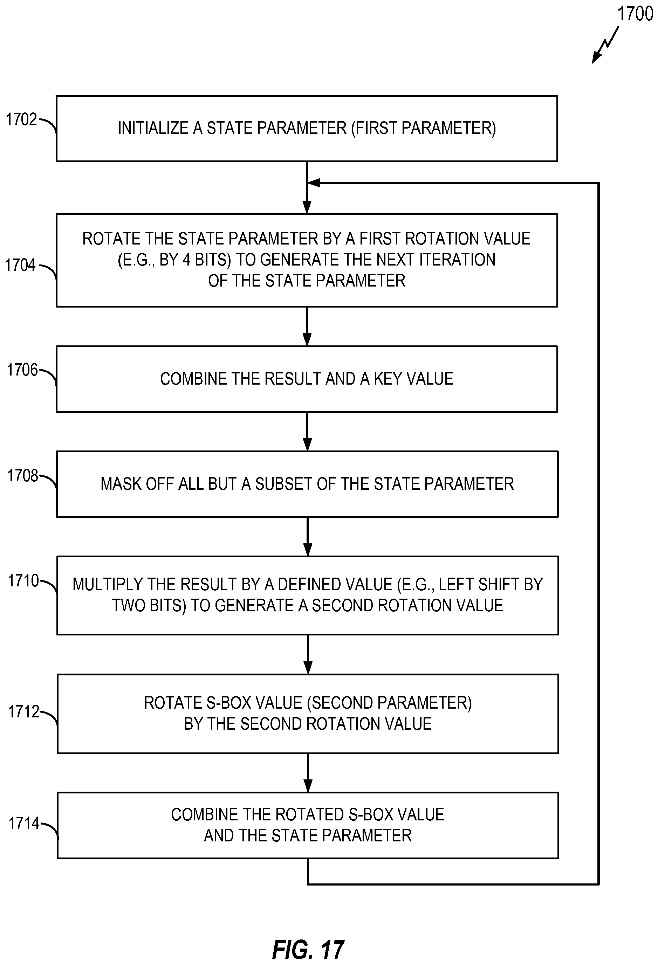

FIG. 17 illustrates a cipher process 1700 that provides a more detailed example of the cipher process 1600 of FIG. 16 in accordance with some aspects of the disclosure. The process 1700 is the inverse of the process 1500 of FIG. 15. For example, the process 1500 could be used for encryption and the process 1700 used for decryption, or vice versa.

The process 1700 may take place within a processing circuit (e.g., the processing circuit 802 of FIG. 8, the processing circuit 1002 of FIG. 10, or the processing circuit 1210 of FIG. 12), which may be located in an electronic device, a transceiver, or some other suitable apparatus. Of course, in various aspects within the scope of the disclosure, the process 1700 may be implemented by any suitable apparatus capable of supporting cipher operations.

At block 1702, a state parameter is initialized. For example, the operations of block 1702 may correspond to the operations of block 1302 of FIG. 13 whereby an initial value for the state parameter is based on an input value (e.g., plaintext or ciphertext).

At block 1704, the state parameter is rotated to the left according to a first rotation value to provide the next iteration of the state parameter for the next round of the cipher. The operations of block 1704 can be performed by the first instruction line of Equation 12 or 17.

At block 1706, the result of block 1704 is combined (e.g., XORed) with a cryptographic key value to provide another updated value for the state parameter. The operations of block 1706 can be performed, for example, at the second instruction line of equation 806 of FIG. 8 or equation 1006 of FIG. 10. As indicated in the "paul" ciphers described above, the state parameter may be XORed with a key value at other parts of the cipher.

At block 1708, all of the bits of the state parameter except for a subset of the state parameter (e.g., one nibble) are masked off. As shown in Equations 12 and 17, this may be achieved by ANDing the state parameter and the value 0xF.

At block 1710, the result of block 1708 is multiplied by four to generate a second rotation value. As shown in Equations 12 and 17, this may be achieved shifting the result of the AND operation to the left by two bits.

At block 1712, an S-Box vector is rotated to the right by the number of bits specified by the second rotation value generated at block 1710.

At block 1714, the result of block 1712 is combined (e.g., XORed) with the state parameter to provide an updated value for the state parameter. It should be appreciated that the operations of blocks 1708 - 1714 can be performed by the second instruction line of Equation 12 or the second and third instruction lines of Equation 17.

The operations of blocks 1704 to 1714 are performed on an iterative basis to generate a decrypted value (plaintext) based on the input value (ciphertext) or to generate an encrypted value (ciphertext) based on the input value (plaintext).

**Conclusion**

One or more of the components, steps, features and/or functions illustrated in the figures may be rearranged and/or combined into a single component, step, feature or function or embodied in several components, steps, or functions. Additional elements, components, steps, and/or functions may also be added without departing from novel features disclosed herein. The apparatus, devices, and/or components illustrated in the figures may be configured to perform one or more of the methods, features, or steps described herein. The novel algorithms described herein may also be efficiently implemented in software and/or embedded in hardware.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein. Additional elements, components, steps, and/or functions may also be added or not utilized without departing from the disclosure.

While features of the disclosure may have been discussed relative to certain implementations and figures, all implementations of the disclosure can include one or more of the advantageous features discussed herein. In other words, while one or more implementations may have been discussed as having certain advantageous features, one or more of such features may also be used in accordance with any of the various implementations discussed herein. In similar fashion, while exemplary implementations may have been discussed herein as device, system, or method implementations, it should be understood that such exemplary implementations can be implemented in various devices, systems, and methods.

Also, it is noted that at least some implementations have been described as a process that is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. In some aspects, a process may correspond to a method, a function, a procedure, a subroutine, a subprogram, etc. When a process corresponds to a function, its termination corresponds to a return of the function to the calling function or the main function. One or more of the various methods described herein may be partially or fully implemented by code (e.g., instructions and/or data) that may be stored in a machine-readable, computer-readable, and/or processor-readable storage medium, and executed by one or more processors, machines and/or devices.

Those of skill in the art would further appreciate that the various illustrative logical blocks, modules, circuits, and algorithm steps described in connection with the implementations disclosed herein may be implemented as hardware, software, firmware, middleware, microcode, or any combination thereof. To clearly illustrate this interchangeability, various illustrative components, blocks, modules, circuits, and steps have been described above generally in terms of their functionality. Whether such functionality is implemented as hardware or software depends upon the particular application and design constraints imposed on the overall system.

Within the disclosure, the word "exemplary" is used to mean "serving as an example, instance, or illustration." Any implementation or aspect described herein as "exemplary" is not necessarily to be construed as preferred or advantageous over other aspects of the disclosure. Likewise, the term "aspects" does not require that all aspects of the disclosure include the discussed feature, advantage or mode of operation. The term "coupled" is used herein to refer to the direct or indirect coupling between two objects. For example, if object A physically touches object B, and object B touches object C, then objects A and C may still be considered coupled to one another-even if they do not directly physically touch each other. For instance, a first die may be coupled to a second die in a package even though the first die is never directly physically in contact with the second die. The terms "circuit" and "circuitry" are used broadly, and intended to include both hardware implementations of electrical devices and conductors that, when connected and configured, enable the performance of the functions described in the disclosure, without limitation as to the type of electronic circuits, as well as software implementations of information and instructions that, when executed by a processor, enable the performance of the functions described in the disclosure.

As used herein, the term "determining" encompasses a wide variety of actions. For example, "determining" may include calculating, computing, processing, deriving, investigating, looking up (e.g., looking up in a table, a database or another data structure), ascertaining, and the like. Also, "determining" may include receiving (e.g., receiving information), accessing (e.g., accessing data in a memory), and the like. Also, "determining" may include resolving, selecting, choosing, establishing, and the like.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language of the claims, wherein reference to an element in the singular is not intended to mean "one and only one" unless specifically so stated, but rather "one or more." Unless specifically stated otherwise, the term "some" refers to one or more. A phrase referring to "at least one of' a list of items refers to any combination of those items, including single members. As an example, "at least one of: a, b, or c" is intended to cover: a; b; c; a and b; a and c; b and c; and a, b and c. All structural and functional equivalents to the elements of the various aspects described throughout this disclosure that are known to those of ordinary skill in the art are intended to be encompassed by the claims. Moreover, nothing disclosed herein is intended to be dedicated to the public regardless of whether such disclosure is explicitly recited in the claims.

Accordingly, the various features associate with the examples described herein and shown in the accompanying drawings can be implemented in different examples and implementations without departing from the scope of the disclosure. Therefore, although certain specific constructions and arrangements have been described and shown in the accompanying drawings, such implementations are merely illustrative and not restrictive of the scope of the disclosure, since various other additions and modifications to, and deletions from, the described implementations will be apparent to one of ordinary skill in the art. Thus, the scope of the disclosure is only determined by the literal language, and legal equivalents, of the claims which follow.

## Claims

1. A method (1300) for generating a ciphered signal using an iterative cipher, comprising:

   receiving a first signal (1302);
   determining a current instance of a state value of the iterative cipher from the first signal (1304);
   determining a rotation distance using the current instance of the state value (1306);
   rotating a substitution box value by the rotation distance (1308);
   combining the rotated substitution box value and the current instance of the state value (1310) yielding a combination of said rotated substitution box value and said current instance of the state value; and
generating a subsequent instance of the state value of the iterative cipher using the combination of the rotated substitution box value and the current instance of the state value (1312).

2. The method (1300) of claim 1, wherein the combining (1310) comprises:

   masking the rotated substitution box value; and
   combining the masked rotated substitution box value and the current instance of the state value.

3. The method (1300) of claim 1, wherein the combining (1310) comprises:
   generating an interim instance of the state value by combining the rotated substitution box value and the current instance of the state value.

4. The method (1300) of claim 3, wherein:

   the generation of the subsequent instance of the state value (1312) comprises rotating the interim instance of the state value; and
   the interim instance of the state value is rotated by a quantity of bits that is based on a quantity of bits of the substitution box value.

5. The method (1300) of claim 4, wherein the generation of the interim instance of the state value comprises combining a cryptographic key with a result of the combining of the rotated substitution box value and the current instance of the state value.

6. The method (1300) of claim 1, wherein the determination of the current instance of the state value (1304) comprises:

   combining a cryptographic key and a previous instance of the state value; or
   rotating a previous instance of the state value.

7. The method (1300) of claim 1, wherein:

   the determination of the rotation distance (1306) is based on a subset of the bits of the current instance of the state value; or
   the generation of the subsequent instance of the state value (1312) of the iterative cipher comprises combining a cryptographic key with the combination of the rotated substitution box value and the current instance of the state value.

8. The method (1300) of claim 1, wherein the determination of the rotation distance (1306) comprises:
   selecting a subset of bits from the current instance of the state value;
   determining a first number that corresponds to the selected subset of bits; determining a second number that corresponds to a quantity of bits of the substitution box value; and multiplying the first number by the second number.

9. The method (1300) of claim 1, wherein the substitution box value value is bijective.

10. The method (1300) of claim 1, wherein the determination of the rotation distance (1306), the rotation of the substitution box value (1308), and the combination of the rotated substitution box value and the current instance of the state value (1310) are performed by operations:

$$s\ \hat{} = ROR(sbox, (s\ \&\ M1) << S1)\ \&\ MASK;$$

and

$$s = ROR(s, R1),$$

where $\hat{}=$ is an XOR operation, ROR is a rotate right operation, & is an AND operation, << is a bit shift left operation, s corresponds to instances of the state value, M1 is a first mask value, MASK is a second mask value, S1 is a shift value, R1 is a rotation value, and sbox corresponds to instances of the substitution box value.

11. The method (1300) of claim 1, wherein the determination of the rotation distance (1306), the rotation of the substitution box value (1308), and the combination of the rotated substitution box value and the current instance of the state value (1310) are performed by operations:

$$s = ROL(s, R1);$$

and

$$s \mathbin{\char`\^}= ROR(sbox, (s \mathbin{\&} M1) \ll S1) \mathbin{\&} MASK,$$

where ^= is an XOR operation, ROL is a rotate left operation, ROR is a rotate right operation, & is an AND operation, << is a bit shift left operation, s corresponds to instances of the state value, M1 is a first mask value, MASK is a second mask value, R1 is a rotation value, S1 is a shift value, and sbox corresponds to instances of the substitution box value.

12. The method (1300) of claim 1, wherein the determination of the rotation distance (1306), the rotation of the substitution box value (1308), and the combination of the rotated substitution box value and the current instance of the state value (1310) are performed by operations:

$$s \mathbin{\char`\^}= ROR(sbox, (s \mathbin{\&} M1) \ll S1);$$

and

$$s = ROR(s, R1),$$

where ^= is an XOR operation, ROR is a rotate right operation, & is an AND operation, << is a bit shift left operation, s corresponds to instances of the state value, M1 is a mask value, S1 is a shift value, R1 is a rotation value, and sbox corresponds to instances of the substitution box value.

13. The method (1300) of claim 1, wherein the determination of the rotation distance (1306), the rotation of the substitution box value (1308), and the combination of the rotated substitution box value and the current instance of the state value (1310)are performed by operations:

$$s = ROL(s, R1);$$

$$shift = (tinv \gg ((state \mathbin{\&} M1) \ll S1)) \ll S2;$$

and

$$s \mathbin{\char`\^}= ROR(sbox, shift),$$

where ^= is an XOR operation, ROL is a rotate left operation, ROR is a rotate right operation, & is an AND operation, << is a bit shift left operation, >> is a bit shift right operation, s corresponds to instances of the state value, M1 is a mask value, S1 is a first shift value, S2 is a second shift value, R1 is a first rotation value, shift is a second rotation value, tinv is an inverse substitution box value, and sbox corresponds to instances of the substitution box value.

14. An apparatus for generating a ciphered signal using an iterative cipher, comprising:

means for receiving a first signal;
means for determining a current instance of a state value of the iterative cipher from the first signal;
means for determining a rotation distance using the current instance of the state value;
means for rotating a substitution box value by the rotation distance;
means for combining the rotated substitution box value and the current instance of the state value yielding a combination of said rotated substitution box value and said current instance of the state value; and
means for generating a subsequent instance of the state value of the iterative cipher second signal using the combination of the rotated substitution box and the current instance of the state value.

15. A non-transitory computer-readable medium storing computer executable code, including code to:

receive a first signal;
determine a current instance of a state value of an iterative cipher from the first signal;
determine a rotation distance using the current instance of the state value;
rotate a substitution box value by the rotation distance;
combine the rotated substitution box value and the current instance of the state value, yielding a combination of said rotated substitution box value and said current instance of the state value; and
generate a subsequent instance of the state value of the iterative cipher using the combination of the rotated substitution box value and the current instance of the state value.


**Patentansprüche**

1. Verfahren (1300) zum Erzeugen eines chiffrierten Signals mit einer iterativen Chiffre, das Folgendes beinhaltet:

Empfangen eines ersten Signals (1302);
Bestimmen einer aktuellen Instanz eines Zustandswertes der iterativen Chiffre von dem ersten Signal (1304);
Bestimmen einer Rotationsdistanz anhand der aktuellen Instanz des Zustandswertes (1306);
Drehen eines Substitutionsboxwertes um die Rotationsdistanz (1308);
Kombinieren des gedrehten Substitutionsboxwertes und der aktuellen Instanz des Zustandswertes (1310), um eine Kombination aus dem genannten gedrehten Substitutionsboxwert und der genannten aktuellen Instanz des Zustandswertes zu erhalten; und
Erzeugen einer nachfolgenden Instanz des Zustandswertes der iterativen Chiffre anhand der Kombination aus dem gedrehten Substitutionsboxwert und der aktuellen Instanz des Zustandswertes (1312).

2. Verfahren (1300) nach Anspruch 1, wobei das Kombinieren (1310) Folgendes beinhaltet:

Maskieren des gedrehten Substitutionsboxwertes; und
Kombinieren des maskierten gedrehten Substitutionsboxwertes und der aktuellen Instanz des Zustandswertes.

3. Verfahren (1300) nach Anspruch 1, wobei das Kombinieren (1310) Folgendes beinhaltet:
Erzeugen einer Zwischeninstanz des Zustandswertes durch Kombinieren des gedrehten Substitutionsboxwertes und der aktuellen Instanz des Zustandswertes.

4. Verfahren (1300) nach Anspruch 3, wobei:

das Erzeugen der nachfolgenden Instanz des Zustandswertes (1312) das Drehen der Zwischeninstanz des Zustandswertes beinhaltet; und
die Zwischeninstanz des Zustandswertes um eine Menge an Bits gedreht wird, die auf einer Menge an Bits des Substitutionsboxwertes basiert.

5. Verfahren (1300) nach Anspruch 4, wobei das Erzeugen der Zwischeninstanz des Zustandswertes das Kombinieren eines kryptografischen Schlüssels mit einem Ergebnis der Kombination aus dem gedrehten Substitutionsboxwert und der aktuellen Instanz des Zustandswertes beinhaltet.

6. Verfahren (1300) nach Anspruch 1, wobei das Bestimmen der aktuellen Instanz des Zustandswertes (1304) Folgendes beinhaltet:

Kombinieren eines kryptografischen Schlüssels und einer vorherigen Instanz des Zustandswertes; oder Drehen einer vorherigen Instanz des Zustandswertes.

7. Verfahren (1300) nach Anspruch 1, wobei:

die Bestimmung der Rotationsdistanz (1306) auf einem Teilsatz der Bits der aktuellen Instanz des Zustandswertes basiert; oder
das Erzeugen der nachfolgenden Instanz des Zustandswertes (1312) der iterativen Chiffre das Kombinieren eines kryptografischen Schlüssels mit der Kombination aus dem gedrehten Substitutionsboxwert und der aktuellen Instanz des Zustandswertes beinhaltet.

8. Verfahren (1300) nach Anspruch 1, wobei das Bestimmen der Rotationsdistanz (1306) Folgendes beinhaltet: Auswählen eines Teilsatzes von Bits aus der aktuellen Instanz des Zustandswertes; Bestimmen einer ersten Zahl, die dem gewählten Teilsatz von Bits entspricht; Bestimmen einer zweiten Zahl, die einer zweiten Menge an Bits des Substitutionsboxwertes entspricht; und Multiplizieren der ersten Zahl mit der zweiten Zahl.

9. Verfahren (1300) nach Anspruch 1, wobei der Substitutionsboxwert bijektiv ist.

10. Verfahren (1300) nach Anspruch 1, wobei das Bestimmen der Rotationsdistanz (1306), der Rotation des Substitutionsboxwertes (1308) und der Kombination aus dem gedrehten Substitutionsboxwert und der aktuellen Instanz des Zustandswertes (1310) durch die folgenden Operationen durchgeführt wird:

$$s \mathbin{\char`\^}= ROR(sbox, (s \mathbin{\&} M1) \ll S1) \mathbin{\&} MASK;$$

und

$$s = ROR(s, R1),$$

wobei ^= eine XOR-Operation ist, ROR eine Rechtsdrehoperation ist, & eine AND-Operation ist, << eine Bitlinksverschiebungsoperation ist, s Instanzen des Zustandswertes entspricht, M1 ein erster Maskenwert ist, MASK ein zweiter Maskenwert ist, S1 ein Verschiebungswert ist, R1 ein Rotationswert ist und sbox Instanzen des Substitutionsboxwertes entspricht.

11. Verfahren (1300) nach Anspruch 1, wobei das Bestimmen der Rotationsdistanz (1306), der Rotation des Substitutionsboxwertes (1308) und der Kombination des gedrehten Substitutionsboxwertes und der aktuellen Instanz des Zustandswertes (1310) durch die folgenden Operationen durchgeführt werden:

$$s = ROL(s, R1);$$

$$s \mathbin{\char`\^}= ROR(sbox, (s \mathbin{\&} M1) \ll S1) \mathbin{\&} MASK,$$

wobei ^= eine XOR-Operation ist, ROL eine Linksdrehoperation ist, ROR eine Rechtsdrehoperation ist, & eine AND-Operation ist, << eine Bitlinksverschiebungsoperation ist, s Instanzen des Zustandswertes entspricht, M1 ein erster Maskenwert ist, MASK ein zweiter Maskenwert ist, R1 ein Rotationswert ist, S1 ein Verschiebungswert ist und sbox Instanzen des Substitutionsboxwertes entspricht.

12. Verfahren (1300) nach Anspruch 1, wobei das Bestimmen der Rotationsdistanz (1306), der Rotation des Substitutionsboxwertes (1308) und der Kombination des gedrehten Substitutionsboxwertes und der aktuellen Instanz des Zustandswertes (1310) durch die folgenden Operationen durchgeführt werden:

$$s \mathbin{\char`\^}= ROR(sbox, (s \mathbin{\&} M1) \ll S1);$$

und

$$s = \mathrm{ROR}(s, R1),$$

wobei ^= eine XOR-Operation ist, ROR eine Rechtsdrehoperation ist, & eine AND-Operation ist, << eine Bitlinksverschiebungsoperation ist, s Instanzen des Zustandswertes entspricht, M1 ein Maskenwert ist, S1 ein Verschiebungswert ist, R1 ein Rotationswert ist und sbox Instanzen des Substitutionsboxwertes entspricht.

13. Verfahren (1300) nach Anspruch 1, wobei das Bestimmen der Rotationsdistanz (1306), der Rotation des Substitutionsboxwertes (1308) und der Kombination aus dem gedrehten Substitutionsboxwert und der aktuellen Instanz des Zustandswertes (1310) durch die folgenden Operationen durchgeführt werden:

$$s = \mathrm{ROL}(s, R1);$$

$$shift = (tinv \gg ((state \,\&\, M1) \ll S1)) \ll S2;$$

und

$$s \mathrel{^\wedge}= \mathrm{ROR}(sbox, shift),$$

wobei ^= eine XOR-Operation ist, ROL eine Linksdrehoperation ist, ROR eine Rechtsdrehoperation ist, & eine AND-Operation ist, << eine Bitlinksverschiebungsoperation ist, >> eine Bitrechtsverschiebungsoperation ist, s Instanzen des Zustandswertes entspricht, M1 ein Maskenwert ist, S1 ein erster Verschiebungswert ist, S2 ein zweiter Verschiebungswert ist, R1 ein erster Rotationswert ist, shift ein zweiter Rotationswert ist, tinv ein Umkehrsubstitutionsboxwert ist und sbox Instanzen des Substitutionsboxwertes entspricht.

14. Vorrichtung zum Erzeugen eines chiffrierten Signals mit einer iterativen Chiffre, die Folgendes umfasst:

Mittel zum Empfangen eines ersten Signals;
Mittel zum Bestimmen einer aktuellen Instanz eines Zustandswertes der iterativen Chiffre vom ersten Signal;
Mittel zum Bestimmen einer Rotationsdistanz anhand der aktuellen Instanz des Zustandswertes;
Mittel zum Drehen eines Substitutionsboxwertes um die Rotationsdistanz;
Mittel zum Kombinieren des gedrehten Substitutionsboxwertes und der aktuellen Instanz des Zustandswertes, so dass eine Kombination aus dem genannten gedrehten Substitutionsboxwert und der genannten aktuellen Instanz des Zustandswertes erhalten wird; und
Mittel zum Erzeugen einer nachfolgenden Instanz des Zustandswertes der iterative Chiffre zweites Signal anhand der Kombination aus der gedrehten Substitutionsbox und der aktuellen Instanz des Zustandswertes.

15. Nichtflüchtiges computerlesbares Medium, auf dem computerausführbarer Code gespeichert ist, einschließlich Code zum:

Empfangen eines ersten Signals;
Bestimmen einer aktuellen Instanz eines Zustandswertes einer iterativen Chiffre von dem ersten Signal;
Bestimmen einer Rotationsdistanz anhand der aktuellen Instanz des Zustandswertes;
Drehen eines Substitutionsboxwertes um die Rotationsdistanz;
Kombinieren des gedrehten Substitutionsboxwertes und der aktuellen Instanz des Zustandswertes, so dass eine Kombination aus dem genannten gedrehten Substitutionsboxwert und der genannten aktuellen Instanz des Zustandswertes erhalten wird; und
Erzeugen einer nachfolgenden Instanz des Zustandswertes der iterativen Chiffre anhand der Kombination aus dem gedrehten Substitutionsboxwert und der aktuellen Instanz des Zustandswertes.

**Revendications**

1. Procédé (1300) permettant de générer un signal chiffré en utilisant un chiffrement itératif, comprenant :

recevoir un premier signal (1302) ;
déterminer une instance courante d'une valeur d'état du chiffrement itératif à partir du premier signal (1304) ;
déterminer une distance de rotation en utilisant l'instance courante de la valeur d'état (1306) ;
effectuer la rotation d'une valeur de boîte de substitution de la distance de rotation (1308) ;
combiner la valeur de boîte de substitution ayant subi une rotation et l'instance courante de la valeur d'état (1310) donnant une combinaison de ladite valeur de boîte de substitution ayant subi une rotation et de ladite instance courante de la valeur d'état ; et
générer une instance subséquente de la valeur d'état du chiffrement itératif en utilisant la combinaison de la valeur de boîte de substitution ayant subi une rotation et de l'instance courante de la valeur d'état (1312).

2. Procédé (1300) selon la revendication 1, dans lequel le fait de combiner (1310) comprend :

masquer la valeur de boîte de substitution ayant subi une rotation ; et
combiner la valeur de boîte de substitution ayant subi une rotation et l'instance courante de la valeur d'état.

3. Procédé (1300) selon la revendication 1, dans lequel le fait de combiner (1310) comprend :
générer une instance intérimaire de la valeur d'état en combinant la valeur de boîte de substitution ayant subi une rotation et l'instance courante de la valeur d'état.

4. Procédé (1300) selon la revendication 3, dans lequel :

la génération de l'instance courante subséquente de la valeur d'état (1312) comprend effectuer la rotation de l'instance intérimaire de la valeur d'état ; et
l'instance intérimaire de la valeur d'état subit une rotation d'une quantité de bits qui est basée sur une quantité de bits de la valeur de la boîte de substitution.

5. Procédé (1300) selon la revendication 4, dans lequel la génération de l'instance intérimaire de la valeur d'état comprend combiner une clé cryptographique avec un résultat de la combinaison de la valeur de boîte de substitution ayant subi une rotation et de l'instance courante de la valeur d'état.

6. Procédé (1300) selon la revendication 1, dans lequel la détermination de l'instance courante de la valeur d'état (1304) comprend :

combiner une clé cryptographique et une instance précédente de la valeur d'état ; ou bien
effectuer la rotation d'une instance précédente de la valeur d'état.

7. Procédé (1300) selon la revendication 1, dans lequel :

la détermination de la distance de rotation (1306) est basée sur un sous-ensemble des bits de l'instance courante de la valeur d'état ; ou bien
la génération de l'instance subséquente de la valeur d'état (1312) du chiffrement itératif comprend combiner une clé cryptographique avec la combinaison de la valeur de boîte de substitution ayant subi une rotation et de l'instance courante de la valeur d'état.

8. Procédé (1300) selon la revendication 1, dans lequel la détermination de la distance de rotation (1306) comprend :

sélectionner un sous-ensemble de bits de l'instance courante de la valeur d'état ;
déterminer un premier nombre qui correspond au sous-ensemble sélectionné de bits ;
déterminer un deuxième nombre qui correspond à une quantité de bits de la valeur de boîte de substitution ; et
multiplier le premier nombre par le deuxième nombre.

9. Procédé (1300) selon la revendication 1, dans lequel la valeur de boîte de substitution est bijective.

10. Procédé (1300) selon la revendication 1, dans lequel la détermination de la distance de rotation (1306), la rotation de la valeur de boîte de substitution (1308) et la combinaison de la valeur de boîte de substitution ayant subi une rotation et de l'instance courante de la valeur d'état (1310) sont effectuées par les opérations :

$$s \,\hat{}\!= ROR(sbox, (s \,\&\, M1) << S1) \,\&\, MASK;$$

et

$$s = ROR(s, R1),$$

où ^= est une opération XOR, ROR est une opération de rotation à droite, & est une opération AND, << est une opération de décalage de bit à gauche, s correspond aux distances de la valeur d'état, M1 est une première valeur de masque, MASK est une deuxième valeur de masque, S1 est une valeur de décalage, R1 est une valeur de rotation et sbox correspond aux instances de la valeur de boîte de substitution.

11. Procédé (1300) selon la revendication 1, dans lequel la détermination de la distance de rotation (1306), la rotation de la valeur de boîte de substitution (1308) et la combinaison de la valeur de boîte de substitution ayant subi une rotation et de l'instance courante de la valeur d'état (1310) sont effectuées par les opérations :

$$s = ROL(s, R1) \,;$$

et

$$s \,\hat{}\!= ROR(sbox, (s \,\&\, M1) << S1) \,\&\, MASK,$$

où ^= est une opération XOR, ROL est une opération de rotation à gauche, ROR est une opération de rotation à droite, & est une opération AND, << est une opération de décalage de bit à gauche, s correspond aux instances de la valeur d'état, M1 est une première valeur de masque, MASK est une deuxième valeur de masque, R1 est une valeur de rotation, S1 est une valeur de décalage et sbox correspond aux instances de la valeur de boîte de substitution.

12. Procédé (1300) selon la revendication 1, dans lequel la détermination de la distance de rotation (1306), la rotation de la valeur de boîte de substitution (1308) et la combinaison de la valeur de boîte de substitution ayant subi une rotation et de l'instance courante de la valeur d'état (1310) sont effectuées par les opérations :

$$s \,\hat{}\!= ROR(sbox, (s \,\&\, M1) << S1) \,;$$

et

$$s = ROR(s, R1),$$

où ^= est une opération XOR, ROR est une opération de rotation à droite, & est une opération AND, << est une opération de décalage de bit à gauche, s correspond aux instances de la valeur d'état, M1 est une valeur de masque, S1 est une valeur de décalage, R1 est une valeur de rotation et sbox correspond aux instances de la valeur de boîte de substitution.

13. Procédé (1300) selon la revendication 1, dans lequel la détermination de la distance de rotation (1306), la rotation de la valeur de boîte de substitution (1308) et la combinaison de la valeur de boîte de substitution ayant subi une rotation et de l'instance courante de la valeur d'état (1310) sont effectuées par les opérations :

$$s = ROL(s, R1) \,;$$

$$\text{shift} = (\text{tinv} >> ((\text{state \& M1}) <<S1)) <<S2;$$

et

$$s^\wedge = \text{ROR}(\text{sbox, shift}),$$

où ^= est une opération XOR, ROL est une opération de rotation à gauche, ROR est une opération de rotation à droite, & est une opération AND, « est une opération de décalage de bit à gauche, » est une opération de décalage de bit à droite, s correspond aux instances de la valeur d'état, M1 est une valeur de masque, S1 est une première valeur de décalage, S2 est une deuxième valeur de décalage, R1 est une première valeur de rotation, shift est une deuxième valeur de rotation et sbox correspond aux instances de la valeur de boîte de substitution.

**14.** Appareil permettant de générer un signal chiffré en utilisant un chiffrement itératif, comprenant :

un moyen pour recevoir un premier signal ;
un moyen pour déterminer une instance courante d'une valeur d'état du chiffrement itératif à partir du premier signal ;
un moyen pour déterminer une distance de rotation en utilisant l'instance courante de la valeur d'état ;
un moyen pour effectuer la rotation d'une valeur de boîte de substitution de la distance de rotation ;
un moyen pour combiner la valeur de boîte de substitution ayant subi une rotation et l'instance courante de la valeur d'état, donnant une combinaison de ladite valeur de boîte de substitution ayant subi une rotation et de ladite instance courante de la valeur d'état ; et
un moyen pour générer une instance subséquente de la valeur d'état du deuxième signal du chiffrement itératif en utilisant la combinaison de la boîte de substitution ayant subi une rotation et de l'instance courante de la valeur d'état.

**15.** Support non transitoire lisible par ordinateur stockant du code exécutable par ordinateur, y compris du code pour :

recevoir un premier signal ;
déterminer une instance courante d'une valeur d'état d'un chiffrement itératif à partir du premier signal ;
déterminer une distance de rotation en utilisant l'instance courante de la valeur d'état ;
effectuer la rotation d'une valeur de boîte de substitution de la distance de rotation ;
combiner la valeur de boîte de substitution ayant subi une rotation et l'instance courante de la valeur d'état, donnant une combinaison de ladite valeur de boîte de substitution ayant subi une rotation et de ladite instance courante de la valeur d'état ;
et
générer une instance subséquente de la valeur d'état du chiffrement itératif en utilisant la combinaison de la valeur de boîte de substitution ayant subi une rotation et de l'instance courante de la valeur d'état.

*FIG. 1*

PLAINTEXT INPUT

EXPANSION
PERMUTATION

LINEAR LAYER
206

XOR OF SUBKEY

S-BOXES

NONLINEAR LAYER
208

PERMUTATION P

LINEAR LAYER
210

CIPHERTEXT OUTPUT

FIG. 2

EP 3 205 044 B1

300

[1 0 0 0 0 0 0 0 0 0 0 0 0 0 0 0 0 0 0 0 0 0 0 0 0 0 0 0 0 0 0 0]
[0 0 0 0 0 0 0 0 0 0 0 0 0 0 0 0 0 0 0 0 0 0 0 0 0 1 0 0 0 0 0 0]
[0 0 0 0 0 0 0 0 0 0 0 0 0 0 0 0 0 1 0 0 0 0 0 0 0 0 0 0 0 0 0 0]
[0 0 0 0 0 0 0 1 0 0 0 0 0 0 0 0 0 0 0 0 0 0 0 0 0 0 0 0 0 0 0 0]
[0 0 0 0 0 0 0 0 0 0 0 0 0 0 0 0 0 0 1 0 0 0 0 0 0 0 0 0 0 0 0 0]
[0 0 0 0 0 0 0 0 0 0 0 0 0 0 0 0 0 0 0 0 0 0 0 0 0 0 0 0 0 1 0 0]
[0 0 0 0 0 0 0 0 0 0 0 0 0 0 0 0 0 0 0 0 0 0 0 0 0 1 0 0 0 0 0 0]
[0 0 0 0 1 0 0 0 0 0 0 0 0 0 0 0 0 0 0 0 0 0 0 0 0 0 0 0 0 0 0 0]
[0 0 0 0 0 0 0 0 0 0 0 1 0 0 0 0 0 0 0 0 0 0 0 0 0 0 0 0 0 0 0 0]
[0 0 0 0 0 0 0 0 0 0 0 0 0 0 0 0 0 0 0 0 0 0 1 0 0 0 0 0 0 0 0 0]
[0 0 0 0 0 0 0 0 0 0 0 0 0 0 0 1 0 0 0 0 0 0 0 0 0 0 0 0 0 0 0 0]
[0 0 0 0 0 0 0 0 0 1 0 0 0 0 0 0 0 0 0 0 0 0 0 0 0 0 0 0 0 0 0 0]
[0 0 0 0 0 0 0 0 0 0 0 0 0 0 0 0 0 0 0 0 0 0 0 0 0 0 1 0 0 0 0 0]
[0 0 0 0 0 0 0 0 0 0 0 0 0 0 0 0 0 0 0 0 0 0 1 0 0 0 0 0 0 0 0 0]
[0 1 0 0 0 0 0 0 0 0 0 0 0 0 0 0 0 0 0 0 0 0 0 0 0 0 0 0 0 0 0 0]
[0 0 0 0 0 0 0 0 0 0 0 0 1 0 0 0 0 0 0 0 0 0 0 0 0 0 0 0 0 0 0 0]
[0 0 0 0 0 0 0 0 1 0 0 0 0 0 0 0 0 0 0 0 0 0 0 0 0 0 0 0 0 0 0 0]
[0 0 0 0 0 0 0 0 0 0 0 0 0 0 0 0 0 0 0 0 0 0 0 0 0 0 0 0 1 0 0 0]
[0 0 0 1 0 0 0 0 0 0 0 0 0 0 0 0 0 0 0 0 0 0 0 0 0 0 0 0 0 0 0 0]
[0 0 1 0 0 0 0 0 0 0 0 0 0 0 0 0 0 0 0 0 0 0 0 0 0 0 0 0 0 0 0 0]
[0 0 0 0 0 0 0 0 0 0 0 0 0 0 0 0 0 0 0 0 0 0 0 1 0 0 0 0 0 0 0 0]
[0 0 0 0 0 1 0 0 0 0 0 0 0 0 0 0 0 0 0 0 0 0 0 0 0 0 0 0 0 0 0 0]
[0 0 0 0 0 0 0 0 0 0 0 0 0 0 0 1 0 0 0 0 0 0 0 0 0 0 0 0 0 0 0 0]
[0 0 0 0 0 0 0 0 0 0 0 0 0 0 0 0 0 0 0 0 0 0 0 0 0 0 0 0 0 0 0 1]
[0 0 0 0 0 0 0 0 0 0 0 0 0 1 0 0 0 0 0 0 0 0 0 0 0 0 0 0 0 0 0 0]
[0 0 0 0 0 0 0 0 0 0 0 0 0 0 0 0 0 1 0 0 0 0 0 0 0 0 0 0 0 0 0 0]
[0 0 0 0 0 0 1 0 0 0 0 0 0 0 0 0 0 0 0 0 0 0 0 0 0 0 0 0 0 0 0 0]
[0 0 0 0 0 0 0 0 0 0 0 0 0 0 0 0 0 0 0 0 0 0 0 0 0 0 0 0 0 0 1 0]
[0 0 0 0 0 0 0 1 0 0 0 0 0 0 0 0 0 0 0 0 0 0 0 0 0 0 0 0 0 0 0 0]
[0 0 0 0 0 0 0 0 0 0 0 0 0 0 0 0 0 0 1 0 0 0 0 0 0 0 0 0 0 0 0 0]
[0 0 0 0 0 0 0 0 0 0 0 0 0 0 0 0 0 1 0 0 0 0 0 0 0 0 0 0 0 0 0 0]
[0 0 0 0 0 0 0 0 0 0 0 1 0 0 0 0 0 0 0 0 0 0 0 0 0 0 0 0 0 0 0 0]

*FIG. 3*

PLAINTEXT INPUT
402

NONLINEAR
LAYER
406

LINEAR
LAYER
408

CIPHERTEXT OUTPUT
404

FIG. 4

400

EP 3 205 044 B1

$$\theta : Z_{16} \rightarrow Z_{16}^{16}$$

$$\theta : a \mapsto (a, a+1, ..., a+15)$$

$$\gamma : F_{2^4}^{16} \rightarrow F_{2^4}^{16}$$

$$\gamma : b \mapsto (S(b_0), S(b_1), ..., S(b_{15}))$$

$$S : F_{2^4} \rightarrow F_{2^4} \; s.t.$$

$$S(x) \quad is \quad bijective$$

516

518

522

500

| 520 | x | 0 | 1 | 2 | 3 | 4 | 5 | 6 | 7 | 8 | 9 | A | B | C | D | E | F |
|---|---|---|---|---|---|---|---|---|---|---|---|---|---|---|---|---|---|
| | S(x) | A | E | 9 | 5 | C | 6 | 2 | 0 | D | 7 | 8 | B | 1 | 4 | F | 3 |

*FIG. 5*

$$\theta : Z_{16} \rightarrow Z_{16}^{16}$$

$$\theta : a \mapsto (a, a+1,..., a+15)$$

$$\underbrace{\phantom{xxxxxxxxxxxxxxxxxxx}}_{616}$$

$$\gamma : F_{2^4}^{16} \rightarrow F_{2^4}^{16}$$

$$\gamma : b \mapsto (S(b_0), S(b_1),..., S(b_{15}))$$

$$\underbrace{\phantom{xxxxxxxxxxxxxxxxxxx}}_{618}$$

$$S : F_{2^4} \rightarrow F_{2^4} \text{ s.t.}$$

$$x \mapsto x \oplus S(x) \text{ is bijective}$$

$$\underbrace{\phantom{xxxxxxxxxxxxx}}_{622}$$

600

| 620 | x | 0 | 1 | 2 | 3 | 4 | 5 | 6 | 7 | 8 | 9 | A | B | C | D | E | F |
|---|---|---|---|---|---|---|---|---|---|---|---|---|---|---|---|---|---|
| | S(x) | A | E | 9 | 5 | C | 6 | 2 | 0 | D | 7 | 8 | B | 1 | 4 | F | 3 |

**FIG. 6**

702

PROCESSING CIRCUIT

s ^= ROR(sbox, (s & 0xF) << 2) & MASK;

s ^= key[i];

s = ROR(s, 4),

PLAINTEXT

704

CIPHERTEXT

708

706

*FIG. 7*

802

PROCESSING CIRCUIT

CIPHERTEXT →

s = ROL(s, 4),

s ^= key[i];

s ^= ROR(sbox, (s & 0xF) << 2) & MASK;

→ PLAINTEXT

804

806

808

*FIG. 8*

902

PROCESSING CIRCUIT

PLAINTEXT

s ^= ROR(sbox, (s & 0xF) << 2);

s ^= key[i];

s = ROR(s, 4),

CIPHERTEXT

904

906

908

*FIG. 9*

CIPHERTEXT ──1004

1002

PROCESSING CIRCUIT

s = ROL(s, 4),

s ^= key[i];

shift = ((tinv >> ((s & 0xF) << 2)) & 0xF) << 2;

s ^= ROR(sbox, shift);

──1006

PLAINTEXT ──1008

FIG. 10

EP 3 205 044 B1

FIG. 11

1212 ▽    1200

APPARATUS (E.G., CIPHER DEVICE)

1202
COMMUNICATION INTERFACE

1216   RECEIVER

1214   TRANSMITTER

1204
STORAGE MEDIUM

1232
CODE FOR RECEIVING
A SIGNAL

1234
CODE FOR DETERMINING
A STATE VALUE

1236
CODE FOR DETERMINING
A ROTATION DISTANCE

1238
CODE FOR ROTATING
A FIRST VALUE

1240
CODE FOR COMBINING

1242
CODE FOR GENERATING
A SIGNAL

1210
PROCESSING CIRCUIT

1220
CIRCUIT/MODULE FOR
RECEIVING A SIGNAL

1222
CIRCUIT/MODULE FOR
DETERMINING
A STATE VALUE

1224
CIRCUIT/MODULE FOR
DETERMINING A ROTATION
DISTANCE

1226
CIRCUIT/MODULE FOR
ROTATING A FIRST VALUE

1228
CIRCUIT/MODULE FOR
COMBINING

1230
CIRCUIT/MODULE FOR
GENERATING A SIGNAL

1206
USER INTERFACE

1208
MEMORY DEVICE

1218
CIPHER INFORMATION

*FIG. 12*

1300

| |
|---|
| 1302 — RECEIVE A FIRST SIGNAL |

| |
|---|
| 1304 — DETERMINE A STATE VALUE BASED ON THE FIRST SIGNAL |

| |
|---|
| 1306 — DETERMINE A ROTATION DISTANCE BASED ON THE STATE VALUE |

| |
|---|
| 1308 — ROTATE A FIRST VALUE BASED ON THE ROTATION DISTANCE |

| |
|---|
| 1310 — COMBINE THE ROTATED FIRST VALUE AND THE STATE VALUE |

1314

| |
|---|
| 1312 — GENERATE A SECOND SIGNAL BASED ON THE COMBINATION OF THE ROTATED FIRST VALUE AND THE STATE VALUE |

*FIG. 13*

1400

RECEIVE A VALUE FOR A FIRST PARAMETER

1402

ROTATE A SECOND PARAMETER BASED ON A SUBSET OF
A CURRENT INSTANCE OF THE FIRST PARAMETER

1404

GENERATE AN INTERIM INSTANCE OF THE FIRST PARAMETER
BY COMBINING THE ROTATED SECOND PARAMETER AND THE
CURRENT INSTANCE OF THE FIRST PARAMETER

1406

GENERATE A SUBSEQUENT INSTANCE OF THE FIRST PARAMETER
BY ROTATING THE INTERIM INSTANCE OF THE FIRST PARAMETER

1408

*FIG. 14*

1500

```
┌─────────────────────────────────────────────────────────┐
│                                                          │
1502 ─│   INITIALIZE A STATE PARAMETER (FIRST PARAMETER)       │
│                                                          │
└─────────────────────────────────────────────────────────┘

┌─────────────────────────────────────────────────────────┐
│                                                          │
1504 ─│      MASK OFF ALL BUT A SUBSET OF THE STATE PARAMETER   │
│                                                          │
└─────────────────────────────────────────────────────────┘

┌─────────────────────────────────────────────────────────┐
│   MULTIPLY THE RESULT BY A DEFINED VALUE (E.G., LEFT     │
1506 ─│   SHIFT BY TWO BITS) TO GENERATE A FIRST ROTATION       │
│   VALUE                                                  │
└─────────────────────────────────────────────────────────┘

┌─────────────────────────────────────────────────────────┐
│           ROTATE S-BOX VALUE (SECOND PARAMETER)          │
1508 ─│             BY THE FIRST ROTATION VALUE                 │
└─────────────────────────────────────────────────────────┘

┌─────────────────────────────────────────────────────────┐
1510 ─│   COMBINE THE ROTATED S-BOX VALUE AND THE STATE         │
│   PARAMETER                                              │
└─────────────────────────────────────────────────────────┘

┌─────────────────────────────────────────────────────────┐
1512 ─│           COMBINE THE RESULT AND A KEY VALUE            │
└─────────────────────────────────────────────────────────┘

┌─────────────────────────────────────────────────────────┐
│   ROTATE THE RESULT BY A SECOND ROTATION VALUE          │
1514 ─│   (E.G., BY 4 BITS) TO GENERATE THE NEXT ITERATION      │
│   OF THE STATE PARAMETER                                 │
└─────────────────────────────────────────────────────────┘
```

*FIG. 15*

1600

1602 — RECEIVE A VALUE FOR A FIRST PARAMETER

1604 — GENERATE AN INTERIM INSTANCE OF THE FIRST PARAMETER
BY ROTATING THE CURRENT INSTANCE OF THE FIRST PARAMETER

1606 — ROTATE A SECOND PARAMETER BASED ON A SUBSET OF
AN INTERIM INSTANCE OF THE FIRST PARAMETER

1608 — GENERATE AN SUBSEQUENT INSTANCE OF THE FIRST PARAMETER
BY COMBINING THE ROTATED SECOND PARAMETER AND THE
INTERIM INSTANCE OF THE FIRST PARAMETER

*FIG. 16*

1700

```
┌─────────────────────────────────────────────────────────────┐
1702 │        INITIALIZE A STATE PARAMETER (FIRST PARAMETER)         │
      └─────────────────────────────────────────────────────────────┘
                                    │
                                    ▼
      ┌─────────────────────────────────────────────────────────────┐
      │   ROTATE THE STATE PARAMETER BY A FIRST ROTATION VALUE        │
1704 │  (E.G., BY 4 BITS) TO GENERATE THE NEXT ITERATION            │
      │              OF THE STATE PARAMETER                           │
      └─────────────────────────────────────────────────────────────┘
                                    │
                                    ▼
      ┌─────────────────────────────────────────────────────────────┐
1706 │              COMBINE THE RESULT AND A KEY VALUE               │
      └─────────────────────────────────────────────────────────────┘
                                    │
                                    ▼
      ┌─────────────────────────────────────────────────────────────┐
1708 │      MASK OFF ALL BUT A SUBSET OF THE STATE PARAMETER         │
      └─────────────────────────────────────────────────────────────┘
                                    │
                                    ▼
      ┌─────────────────────────────────────────────────────────────┐
1710 │ MULTIPLY THE RESULT BY A DEFINED VALUE (E.G., LEFT SHIFT BY   │
      │    TWO BITS) TO GENERATE A SECOND ROTATION VALUE             │
      └─────────────────────────────────────────────────────────────┘
                                    │
                                    ▼
      ┌─────────────────────────────────────────────────────────────┐
      │       ROTATE S-BOX VALUE (SECOND PARAMETER)                  │
1712 │           BY THE SECOND ROTATION VALUE                        │
      └─────────────────────────────────────────────────────────────┘
                                    │
                                    ▼
      ┌─────────────────────────────────────────────────────────────┐
      │         COMBINE THE ROTATED S-BOX VALUE                      │
1714 │            AND THE STATE PARAMETER                            │
      └─────────────────────────────────────────────────────────────┘
```

*FIG. 17*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014198913 A1

- US 2004184609 A1


**Non-patent literature cited in the description**

- Unbalanced Feistel Networks and Block Cipher Design. **BRUCE SCHNEIER ; JOHN KELSEY.** Proceedings of the Third International Workshop on Fast Software Encryption. Springer-Verlag, 1996, 121-144